# EUROPEAN PATENT APPLICATION

(11) **EP 4 585 089 A1**
(43) Date of publication of application: **16.07.2025**
(21) Application number: 22958131.9
(22) Date of filing: 08.09.2022
(51) Int. Cl.: A24F 40/95

(54) **AEROSOL GENERATION DEVICE AND PROGRAM**

(71) Applicant: Japan Tobacco Inc., Tokyo 105-6927 (JP)
(72) Inventor: FUJIKI, Takashi, Tokyo 130-8603 (JP); YOSHIDA, Ryo, Tokyo 130-8603 (JP)
(74) Representative: Hoffmann Eitle
(86) International application number: PCT/JP2022/033721
(87) International publication number: WO 2024/053052

(57) **Abstract**

An aerosol generation device having a control unit, a first battery, and a heating unit for heating an aerosol source, wherein when a second battery is provided to a cover member attached to the device body, the control unit controls the supply of power from the second battery to the device body.

## Description

### Technical Field

The present disclosure relates to an aerosol generating device and a program.

### Background Art

An aerosol generating device is a device that generates an aerosol by heating an aerosol source including a flavoring agent or the like, and a secondary battery built in a main body is used as its power supply.

Incidentally, when heating of the aerosol source is started while the level of the secondary battery of the aerosol generating device is not sufficient to use up an unused aerosol source, heating of the aerosol source cannot be continued even before the aerosol source is used up. Attachment of an unused aerosol source is a precondition for controlling heating of the aerosol source. Therefore, when heating of the aerosol source ends due to shortage of the level of the secondary battery, the aerosol source in use can be necessarily discarded.

PTL 1 describes a mechanism of not starting supply of electric power to the heater when the level of the secondary battery is not sufficient to use up an unused aerosol source.

### Citation List

### Patent Literature

PTL 1: International Publication No. 2020/084757

### Summary of Invention

### Technical Problem

Incidentally, even when the level of the secondary battery is lower than a capacity needed to use up an unused aerosol source but when a capacity shortfall can be charged, it is possible to use up an unused aerosol source.

The present disclosure provides an aerosol generating device capable of implementing an operation that takes into consideration not only a battery level of a main body but also a battery level of a component other than the main body in view of the above problem.

### Solution to Problem

An aspect of the present disclosure provides an aerosol generating device. The aerosol generating device includes a controller, a first battery, and a heater that heats an aerosol source. When a second battery is provided in a cover member attached to a device main body, the controller controls supply of electric power from the second battery to the device main body.

When a level of the first battery satisfies a predetermined condition, the controller may provide instructions to supply electric power from the second battery to the device main body.

When the predetermined condition is satisfied, the controller may charge the first battery with electric power of the second battery.

When a possibility that the level of the first battery becomes lower than a capacity needed to use up an unused aerosol source is predicted, the controller may determine that the predetermined condition is satisfied.

When the level of the first battery is lower than a capacity needed to use up an unused aerosol source, the controller may determine that the predetermined condition is satisfied.

Even when the level of the first battery is lower than a capacity needed to use up an unused aerosol source but a total value of the level of the first battery and a level of the second battery is higher than the capacity needed to use up the unused aerosol source, the controller may provide instructions to supply electric power from the second battery to the device main body.

When electric power of the second battery is allowed to be directly supplied to the heater, the controller may directly supply electric power of the second battery to the heater.

The controller may charge the first battery with electric power of the second battery.

The controller may change the level of the second battery used to calculate the total value according to a difference of a power supply path from the second battery to the aerosol generating device.

The controller may supply electric power of the second battery to a component other than the heater in the device main body.

The controller may charge the second battery with electric power supplied from the device main body side to the cover member side.

Another aspect of the present disclosure provides a program for causing a computer provided in an aerosol generating device including a first battery and a heater that heats an aerosol source to, when a second battery is provided in a cover member attached to a device main body, execute a function of controlling supply of electric power from the second battery to the device main body.

### Advantageous Effects of Invention

According to the aspects of the present disclosure, it is possible to provide an aerosol generating device capable of implementing an operation that takes into consideration not only a battery level of a main body but also a battery level of a component other than the main body.

### Brief Description of Drawings

[Fig. 1] Fig. 1 is a front-side view of an aerosol generating device from diagonally above.
[Fig. 2] Fig. 2 is a front-side view of the aerosol generating device from diagonally below.
[Fig. 3] Fig. 3 is a view of the aerosol generating device from diagonally above with a shutter removed.
[Fig. 4] Fig. 4 is a front view of a main device in a state where a front panel is removed.
[Fig. 5] Fig. 5 is a back view of the front panel removed from the main device.
[Fig. 6] Fig. 6 is a diagram that schematically illustrates the internal configuration of the aerosol generating device.
[Fig. 7] Fig. 7 is a diagram that schematically illustrates a connection relation between the front panel and a power supply system circuit in the main device.
[Fig. 8] Fig. 8 is a flowchart that illustrates an example of a front panel attachment detection operation that is executed by a controller of the main device.
[Fig. 9] Fig. 9 is a flowchart that illustrates an example of a USB charging operation that is executed by the controller of the main device.
[Fig. 10] Fig. 10 is a timing chart that illustrates a USB charging operation.
[Fig. 11] Fig. 11 is a flowchart that illustrates an operation in which a secondary battery of the main device is charged by a primary battery of the front panel.
[Fig. 12] Fig. 12 is a timing chart that illustrates auxiliary charging that uses the primary battery of the front panel as an external power supply.
[Fig. 13] Fig. 13 is a graph that illustrates the amount of electric power usable in the whole of the aerosol generating device.
[Fig. 14] Fig. 14 is a flowchart that illustrates another example of a processing operation that uses the front panel as an auxiliary power supply.
[Fig. 15] Fig. 15 is a diagram that illustrates a connection example between power supply lines and sections in the main device.
[Fig. 16] Fig. 16 is a timing chart that illustrates supply of electric power to the main device using the primary battery of the front panel as an external power supply.
[Fig. 17] Fig. 17 is a diagram that schematically illustrates the internal configuration of an aerosol generating device according to a third embodiment.
[Fig. 18] Fig. 18 is a diagram that schematically illustrates a connection relation between the front panel and the power supply system circuit in the main device according to the third embodiment.
[Fig. 19] Fig. 19 is a flowchart that illustrates an example of a USB charging operation that is executed by the controller of the main device.
[Fig. 20] Fig. 20 is a timing chart that illustrates a USB charging operation.
[Fig. 21] Fig. 21 is a flowchart that illustrates an example of a processing operation example in a fourth embodiment.
[Fig. 22] Fig. 22 is a timing chart that illustrates auxiliary charging that uses a battery of the front panel as an external power supply.
[Fig. 23] Fig. 23 is a table that illustrates a relationship between the level of a secondary battery of the front panel, used as an auxiliary power supply, and a level usable in the main device.
[Fig. 24] Fig. 24 is a timing chart that illustrates a loss of electric power resulting from auxiliary charging.
[Fig. 25] Fig. 25 is a flowchart that illustrates auxiliary charging in a fifth embodiment.
[Fig. 26] Fig. 26 is a flowchart that illustrates an example of a processing operation example in a sixth embodiment.
[Fig. 27] Fig. 27 is a flowchart that illustrates an example of auxiliary charging in a seventh embodiment.
[Fig. 28] Fig. 28 is a flowchart that illustrates an example of auxiliary charging in an eighth embodiment.

### Description of Embodiments

Hereinafter, embodiments related to the present disclosure will be described with reference to the drawings. Like reference signs are assigned to the same portions in the drawings.

### <Terms>

Aerosol generating devices according to embodiments each are one mode of an electronic cigarette.

In the following description, a material that is generated by the aerosol generating devices is referred to as aerosol. An aerosol means a mixed element of minute liquid or solid particles suspended in gas with air or other gas.

In each of the embodiments, the aerosol generating device that generates an aerosol without combustion will be described.

In the following description, an action that a user inhales an aerosol generated by the aerosol generating device is referred to as "inhalation" or "puff".

In each of the embodiments, the aerosol generating device to which a solid aerosol source can be attached will be described. A casing that houses a solid aerosol source is also referred to as "capsule" or "stick substrate" according to a product form. Capsules and stick substrates are consumables. Therefore, a guide for replacement is set for capsules and stick substrates.

### <First Embodiment>

### <Appearance Example>

Initially, an appearance example of the aerosol generating device that is used in a first embodiment will be described.

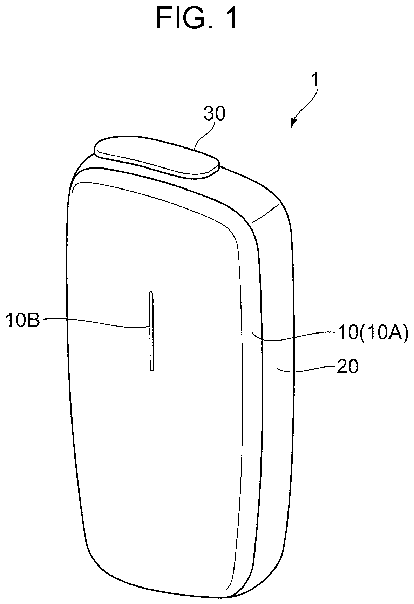

Fig. 1 is a front-side view of the aerosol generating device 1 from diagonally above.

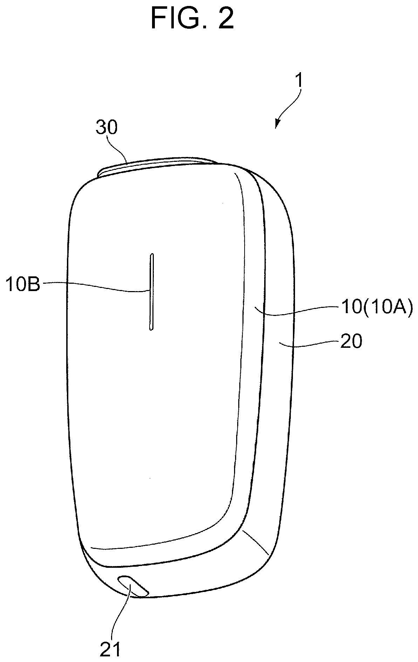

Fig. 2 is a front-side view of the aerosol generating device 1 from diagonally below.

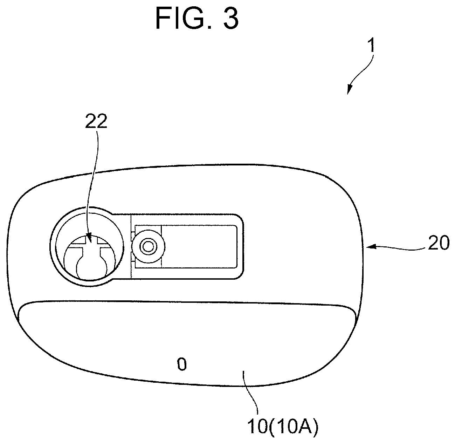

Fig. 3 is a view of the aerosol generating device 1 from above with a shutter 30 removed.

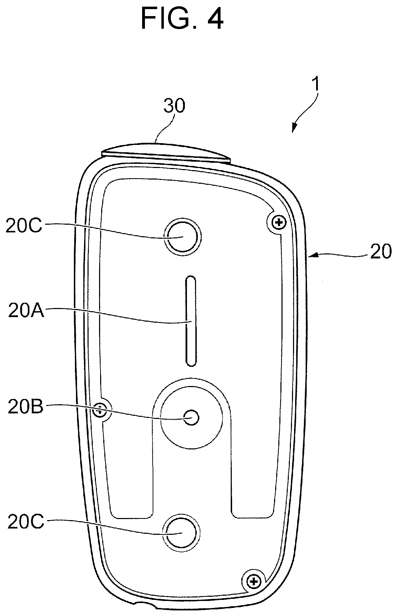

Fig. 4 is a front view of a main device 20 in a state where the front panel 10 is removed.

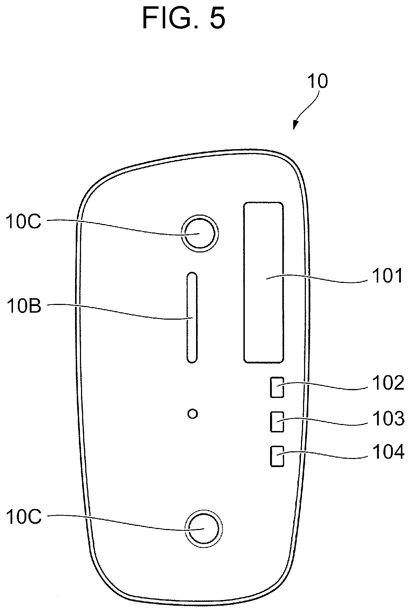

Fig. 5 is a back view of the front panel 10 removed from the main device 20.

The aerosol generating device 1 that is used in the present embodiment has such a size that a user is able to hold the aerosol generating device 1 with one hand.

The aerosol generating device 1 includes the main device 20, the front panel 10 attached to the front of the main device 20, and the shutter 30 disposed at the top surface of the main device 20 and operable so as to slide along the top surface.

The front panel 10 is a member that is attachable to and detachable from the main device 20. Attachment and detachment of the front panel 10 are performed by a user.

The front panel 10 attached to the main device 20 covers a front part of the main device 20 as illustrated in Figs. 1 and 2. In other words, after the front panel 10 is attached as well, a part other than the front part of the main device 20 can be viewed from an outside. For example, the side surface, back surface, top surface, and bottom surface of the main device 20 can be viewed from an outside after the front panel 10 is attached as well.

As illustrated in Figs. 1 and 2, the front panel 10 attached to the main device 20 is continuously flush with the side surface, top surface, and bottom surface of the main device 20 without any step and provides a unified appearance.

In this way, one of the roles of the front panel 10 is decoration. The side surface, top surface, and bottom surface of the main device 20 are examples of the part not covered with the front panel 10.

A window 10B is provided in the front panel 10. The window 10B is provided at a position facing a light-emitting element of the main device 20 side. In the case of the first embodiment, a light emitting diode (LED) 20A (see Fig. 4) is used as the light-emitting element.

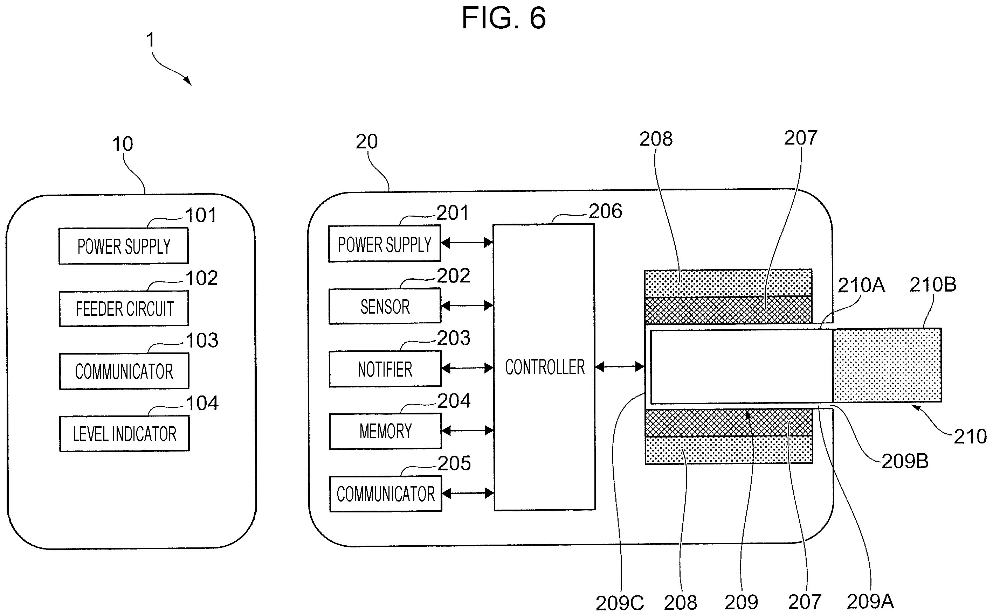

The window 10B in the first embodiment is made of a raw material that transmits light. Alternatively, the window 10B may be a slit that extends through from a front surface to a back surface. Turning-on and blinking of the light-emitting element indicate the status or the like of the operation of the aerosol generating device 1. The status of the operation also includes an error. Turning-on and blinking of the light-emitting element are controlled by a controller 206 (see Fig. 6) (described later).

The front panel 10 plays not only a role as decoration but also a role of buffering propagation of heat released from the main device 20 or the like. Therefore, in the case of the present embodiment, generation of an aerosol is permitted only when the front panel 10 is attached to the main device 20. In other words, the front panel 10 attached to the main device 20 provides a unified appearance with the main device 20 in a state where generation of an aerosol is possible.

Furthermore, the front panel 10 plays a role in protecting the main device 20 from dirt, flaw, or the like. The battery-mounted front panel 10 plays a role in increasing the amount of electric power usable in the whole of the aerosol generating device 1.

The front panel 10 used in the present embodiment deforms when a user pushes a position below the window 10B with a finger tip and returns to an original form when the user stops pushing.

A power supply 101 capable of discharging electricity, a feeder circuit 102 that supplies the main device 20 with electric power stored in the power supply 101, a communicator 103 capable of at least communicating with the main device 20, and a level indicator 104 that measures the level of electric power stored in the power supply 101 are installed on the inner side of the front panel 10 that is used in the present embodiment.

In the case of the present embodiment, for example, a film-type primary battery, a coil-type primary battery, or a chip-type primary battery is assumed as the power supply 101. These batteries are attachable to and detachable from the front panel 10.

Arrangement of the power supply 101, the feeder circuit 102, the communicator 103, and the level indicator 104 in Fig. 5 is an example. A plurality of the power supplies 101 may be installed in the front panel 10.

The front panel 10 in the present embodiment is an example of the cover member. A main body panel 10A that provides the appearance of the front panel 10 illustrated in Figs. 1 and 2 is an example of the main body.

A type C universal serial bus (USB) connector 21 is provided at the bottom surface side of the main device 20. The shape or type of the USB connector 21 is an example. In other words, the USB connector 21 may be a USB other than type C. In the case of the first embodiment, the USB connector 21 is, for example, used to charge a power supply 201 (see Fig. 6) built in the main device 20.

A hole 22 for inserting a stick substrate 210 (see Fig. 6) that houses an aerosol source is provided at a top surface part of the main device 20. In the stick substrate 210 used in the present embodiment, a solid aerosol source is housed in a paper cylinder molded in a substantially cylindrical shape. The hole 22 is exposed when the shutter 30 is caused to slide to an open position and is hidden when the shutter 30 is caused to slide to a closed position.

In the case of the first embodiment, the hole 22 has a cylindrical shape substantially the same type as the stick substrate 210. The diameter of an opening part of the hole 22 is such a dimension that the stick substrate 210 can be inserted. In other words, the diameter of the stick substrate 210 is such a dimension that the stick substrate 210 can be inserted into the hole 22.

For example a magnet is attached to the back surface of the shutter 30. On the other hand, a Hall IC is attached to the main device 20 in a movable range of the shutter 30.

A Hall IC is a magnetic sensor made up of a Hall element, an operational amplifier, and the like, and outputs a voltage according to the strength of a magnetic field that crosses the Hall element.

In the present embodiment, the open or closed state of the shutter 30 is detected from a change in voltage output from the Hall IC as a result of a slide of the shutter 30. In other words, whether the shutter 30 is at the open position or the closed position is detected.

A button 20B is disposed at substantially the center of the front surface of the main device 20. As described above, the button 20B is allowed to be operated in a state where the front panel 10 remains attached.

The button 20B is, for example, used to turn on or off the power of the main device, turn on or off the supply of electric power to a heater 207 (see Fig. 6) that heats an aerosol source, provide pairing instructions for Bluetooth (registered trademark), and the like.

When the button 20B is pressed and held (for example, pressed for five seconds or longer) in a state where the front panel 10 is removed from the main device 20, a reset function activates.

In the present embodiment, Bluetooth Low Energy (BLE) is used as Bluetooth.

Magnets 20C used to attach the front panel 10 are disposed at the upper part and lower part of the front surface of the main device 20. The magnets 20C are provided at positions facing magnets 10C provided on the inner side of the front panel 10. When, for example, the magnets 10C of the front panel 10 are N-poles, the magnets 20C of the main device 20 side are S-poles. Due to the attraction between the magnets, the front panel 10 is attachably and detachably attached to the main device 20.

Any one of the magnet 10C and the magnet 20C may be iron or another magnetic piece of metal. Attachment of the front panel 10 to the main device 20 is detected by the Hall IC provided at the main device 20 side.

Other than the above, various electronic components needed to generate an aerosol are built in the main device 20. In this meaning, the main device 20 is an example of an electronic device specialized to generate an aerosol. In the narrow meaning, the main device 20 is referred to as aerosol generating device.

### <Internal Configuration>

Fig. 6 is a diagram that schematically illustrates the internal configuration of the aerosol generating device 1. Fig. 6 illustrates a state where the stick substrate 210 is set in the main device 20. The internal configuration illustrated in Fig. 6 aims to illustrate electronic components provided in the front panel 10 and the main device 20 and a positional relationship of them. Therefore, the appearance of the electronic components and the like illustrated in Fig. 6 does not necessarily coincide with the above-described appearance view.

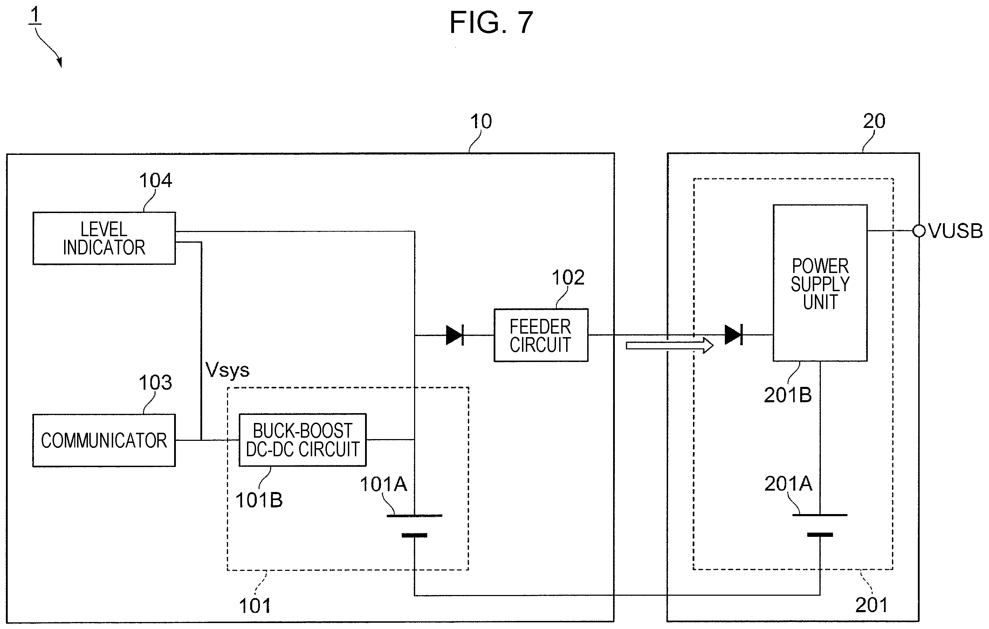

Fig. 7 is a diagram that schematically illustrates a connection relation between the front panel 10 and a power supply system circuit in the main device 20.

As illustrated in Fig. 6, the front panel 10 includes the power supply 101 that stores electricity, the feeder circuit 102 that supplies electric power from the power supply 101 to the main device 20 or the like, the communicator 103 that notifies the level of the battery of the power supply 101 to the main device 20, and the level indicator 104 that measures the level of the battery of the power supply 101.

Fig. 7 illustrates a case where the battery of the power supply 101 is a primary battery 101A. Here, the primary battery 101A is, for example, a lithium battery or an alkaline battery. The primary battery 101A is an example of the second battery. The primary battery 101A functions as a sub-battery or auxiliary battery for the secondary battery 201A of the main device 20 side.

The feeder circuit 102 is made up of, for example, a boost DC-DC circuit. The feeder circuit 102 is a circuit that supplies a constant voltage (for example, 5 V) to the main device 20 regardless of the output voltage of the power supply 101. A circuit that prevents backflow of current is provided in the feeder circuit 102.

In this regard, supply of electric power from the feeder circuit 102 to the main device 20 may be contact power supply or contactless power supply.

For example, a method with mechanical contact of an electrode, a method of mechanical contact with a spring-loaded electrode pin (pogo pin), or a method of coupling of a connector, is used for contact power supply.

For example, supply of electric power using an electromagnetic induction method, such as a Qi standard and a near field communication (NFC), or supply of electric power using an electric field induction method is used for contactless power supply.

The communicator 103 is a communication interface for implementing communication with the main device 20. The communicator 103 in the present embodiment notifies the main device 20 of the level of the primary battery 101A.

The communicator 103 communicates with the main device 20 by using a system that conforms with a selected wired or wireless communication standard. Examples of the communication standard here include a wireless local area network (LAN), a serial signal line, Wi-Fi (registered trademark), and Bluetooth (registered trademark).

In the case of the present embodiment, communication with a smartphone of a user or a server is performed by the communicator 205 of the main device 20; however, the communicator 103 of the front panel 10 can also have a function for communicating with a device other than the main device 20.

The level indicator 104 is a circuit that calculates the level of the primary battery 101A in accordance with a power supply current IBAT, a power supply voltage VBAT, or the like, that appears in a power supply line of the primary battery 101A. Calculation of the level by the level indicator 104 may be performed, for example, at a predetermined period or timing or may be performed only when instructions are issued from the controller 206 of the main device 20. The calculated level is transmitted to the main device 20 through the communicator 103.

A system power supply Vsys needed for the operations of the communicator 103 and the level indicator 104 is supplied from a buck-boost DC-DC circuit 101B.

The buck-boost DC-DC circuit 101B is a voltage conversion circuit that generates 3.3 V system power supply Vsys from the output voltage of the primary battery 101A and supplies the system power supply Vsys to the communicator 103 and the level indicator 104. Therefore, the entire electric power needed for the operations of the communicator 103 and the like is supplied from the primary battery 101A of the front panel 10. In other words, electric power needed for the operations of the communicator 103 and the like provided in the front panel 10 does not need to be supplied from the secondary battery 201A of the main device 20.

On the other hand, the main device 20 includes the power supply 201, a sensor 202, a notifier 203, a memory 204, the communicator 205, the controller 206, a heater 207, a heat insulator 208, and a holder 209.

As described above, Fig. 6 illustrates a state where the stick substrate 210 is held by the holder 209. In this state, an aerosol is inhaled by a user.

The power supply 201 of the present embodiment is a unit that supplies electric power to the main device 20. The power supply 201, for example, stores electric power by using a lithium ion secondary battery or a capacitor. Fig. 7 illustrates an example in which electric power is stored in the secondary battery 201A. The secondary battery 201A is an example of the first battery.

The secondary battery 201A can be charged from an external power supply. In the case of the present embodiment, for example, a commercial power supply, a mobile battery, and the primary battery 101A of the front panel 10 are assumed as external power supplies.

Other than the above, a power supply unit 201B is provided in the power supply 201.

The power supply unit 201B switches a power supply path and converts a voltage level in accordance with an operation mode.

The power supply unit 201B outputs for example, 3.3 V (that is, "system power supply") to a power supply line to which the sensor 202, the notifier 203 (except the LED 20A), the memory 204, the communicator 205, and the controller 206 are connected.

The power supply unit 201B outputs , for example, 5 V to a power supply line to which the LED 20A is connected and outputs, for example, 4.2 V to a power supply line to which the heater 207 is connected.

When the secondary battery 201A is charged from an external power supply, the power supply unit 201B outputs, for example, 4.2 V to a power supply line to which the secondary battery 201A is connected.

External power supplies here include not only a commercial power supply and a mobile battery but also the primary battery 101A of the front panel 10.

Because a USB cable is used to supply electric power from a commercial power supply or a mobile battery, a feeder terminal corresponding to them is indicated by VUSB in Fig. 7.

The sensor 202 is an electronic component that detects various pieces of information on the main device 20.

Examples of the sensor 202 include a pressure sensor, such as a microphone capacitor, and a flow sensor. The sensor 202 serving as a sensor outputs detected information to the controller 206. When, for example, a change in atmospheric pressure resulting from inhalation or flow of air is detected, the sensor 202 outputs a numeric value indicating inhalation of a user to the controller 206.

The sensor 202 is, for example, an input device that receives input from a user. The input device is, for example, a button or a switch. In the present embodiment, the button 20B (see Fig. 4) is used as the input device.

The button 20B is used to, for example, switch the on and off states of a main power or switch the start and stop of power supply to the heater 207 (that is, the start and stop of generating an aerosol).

The content of instructions of a user is output from the sensor 202 to the controller 206. The button 20B is not only an example of the button but also an example of the switch.

Other than the above, the sensor 202 can be a temperature sensor that detects the temperature of the heater 207. The temperature sensor, for example, detects the temperature of the heater 207 in accordance with the electric resistance value of a conductive track of the heater 207. The detected electric resistance value is output from the sensor 202 to the controller 206. The controller 206 calculates the temperature of the heater 207 in accordance with the electric resistance value. In other words, the controller 206 calculates the temperature of the stick substrate 210 held by the holder 209.

Other than the above, the sensor 202 can be a capacitance sensor, an optical sensor, a pressure sensor, or the like, that detects insertion of the stick substrate 210 to the holder 209.

The sensor 202 can be an optical color sensor, a radio frequency identification (RFID) reader, or the like, for individual identification of the stick substrate 210.

The sensor 202 can be a biometric sensor that measures the heart rate or the like of a user, a fingerprint sensor used to unlock, or the like.

The sensor 202 can be an acceleration sensor, a gyro sensor, or the like, that detects the motion of a user.

The notifier 203 is an electronic component that notifies a user of various pieces of information on the main device 20. The notifier 203 can be the LED 20A or another light-emitting device. For example, the LED 20A emits light in a different pattern when the power supply 201 needs to be charged, when the power supply 201 is being charged, or when there is an abnormality in the main device 20.

Patterns here include a difference in color, a difference in timing for turning on or turning off, and the like.

The notifier 203 may be made up of a display device that displays an image, a sound output device that outputs sound, a vibration device that vibrates the main device, or the like, together with the above-described light-emitting device or instead of the light-emitting device. The light-emitting device, the display device, the sound output device, the vibration device, and the like are examples of the notifier that notifies information.

Other than the above, the notifier 203 may notify a user of a state where inhalation of an aerosol is allowed. This notification is provided when the temperature of the stick substrate 210 heated by the heater 207 reaches a predetermined temperature.

The memory 204 stores various pieces of information regarding the operation of the main device 20. The memory 204 is, for example, a non-volatile storage medium, such as a flash memory.

Examples of the information stored in the memory 204 include an operating system (OS), firmware (FW), and other programs.

Examples of the information stored in the memory 204 include information on control over electronic components. The information on control is information on inhalation of a user, such as the number of times of inhalation, inhalation time, and an accumulated inhalation time period.

The communicator 205 is a communication interface for implementing communication between the main device 20 and another device. The communicator 205 communicates with another device in a system that conforms with a selected wired or wireless communication standard. Examples of the communication standard here include a wireless LAN, a wired LAN, Wi-Fi (registered trademark), and Bluetooth (registered trademark).

For example, the communicator 205 transmits information on inhalation of a user to a smartphone.

The communicator 205 downloads from a server an update program and a profile that defines a change in the temperature of the heater 207 in a heating mode.

The controller 206 functions as an arithmetic processing unit and a control device and controls the operation of the main device 20 in accordance with various programs. The controller 206 may control the operation of the feeder circuit 102 provided in the front panel 10.

A control signal is transmitted through a signal line different from the power supply line. For example, a serial communication method, such as an inter-integrated circuit (I2C) communication method, a serial peripheral interface (SPI) communication method, and a universal asynchronous receiver transmitter (UART) communication method, is used for communication in the main device 20. The SPI communication method or the UART communication method is used for communication with the feeder circuit 102 of the front panel 10. For example, BLE is used as a communication line.

The controller 206 is implemented by, for example, an electronic circuit, such as a central processing unit (CPU), a micro processing unit (MPU), a graphical processing unit (GPU), an application specific integrated circuit (ASIC), a field programmable gate array (FPGA), and a digital signal processor (DSP).

The controller 206 may include a read only memory (ROM) that stores programs, computation parameters, and the like and a random access memory (RAM) that temporarily stores parameters and the like that vary as needed.

The controller 206 executes various processes and controls through running programs.

Examples of the processes and controls here include supplying electric power from the power supply 201 to another electronic component, charging the power supply 201, detecting information with the sensor 202, notifying information with the notifier 203, storing and reading information with the memory 204, and transmitting and receiving information by the communicator 205. Communication performed by the communicator 205 also includes communication with the front panel 10.

Other than the above, the controller 206 also controls input of information to an electronic component, a process based on information output from an electronic component, and the like.

The holder 209 is a substantially cylindrical casing. In the present embodiment, a space inside the holder 209, defined by an inner wall and a bottom surface, is referred to as an internal space 209A. The internal space 209A has a substantially columnar shape.

The holder 209 has an opening 209B that communicates the internal space 209A with an outside. The stick substrate 210 is inserted into the internal space 209A through the opening 209B. The stick substrate 210 is inserted until its distal end contacts with a bottom 209C.

The stick substrate 210 is only partially accommodated in the internal space 209A. A state where the stick substrate 210 is accommodated in the internal space 209A is referred that the stick substrate 210 is held in the internal space 209A.

The holder 209 is formed such that the inside diameter of at least part of the holder 209 in an axial direction is smaller than the outside diameter of the stick substrate 210.

Therefore, an outer periphery of the stick substrate 210 inserted in the internal space 209A receives pressure from the inner wall of the holder 209. With this pressure, the stick substrate 210 is held in the internal space 209A.

The holder 209 also has the function to define a flow path for air passing through the stick substrate 210. An air inlet hole that is an inlet for air into the flow path is disposed at, for example, the bottom 209C. The opening 209B is an air outlet hole that is an outlet for air.

In the case of the present embodiment, only part of the stick substrate 210 is held by the holder 209, and the remaining part protrudes outward from a casing. Hereinafter, the part held by the holder 209 is referred to as substrate 210A, and the part protruding from the casing is referred to as inhalation port 210B.

An aerosol source is housed in at least the substrate 210A. The aerosol source is a material that is atomized when heated to generate an aerosol.

The aerosol source contains not only shredded tobacco but also a substance derived from tobacco, such as a processed substance and the like obtained by forming tobacco raw material into a granular form, a sheet form, or a powder form.

Furthermore, the aerosol source may contain a substance not derived from tobacco and produced from a plant other than tobacco, such as mint and a herb. For example, the aerosol source may contain a flavoring agent component, such as menthol.

When the main device 20 is a medical inhaler, the aerosol source may contain a medicine for a patient to inhale. The aerosol source is not limited to a solid and may be, for example, a polyhydric alcohol or a liquid, such as water. Examples of the polyhydric alcohol include glycerine and propylene glycol.

At least part of the inhalation port 210B is held in the mouth of a user during inhalation.

When the user inhales with the inhalation port 210B in his or her mouth, air flows into the internal space 209A through the air inlet hole. Air flowing in passes through the internal space 209A and the substrate 210A and reaches the inside of the mouth of the user. Air that reaches the inside of the mouth of the user contains an aerosol generated in the substrate 210A.

The heater 207 is made up of a heater or another heat generator. The heater 207 is made of a selected raw material, such as a metal and polyimide. The heater 207 is formed in, for example, a film shape and attached to the outer periphery of the holder 209.

When the heater 207 produces heat, the aerosol source included in the stick substrate 210 is heated and atomized. The atomized aerosol source is mixed with air or the like to generate an aerosol.

In the case of Fig. 6, a part around the outer circumference of the stick substrate 210 is initially heated, and a range heated gradually moves to around the center.

Therefore, atomization of the aerosol source begins around the outer circumference of the stick substrate 210 and gradually moves to around the center.

The heater 207 produces heat by using electric power supplied from the power supply 201. When, for example, predetermined user input is detected through the sensor 202, supply of electric power to the heater 207 is permitted. User input here is operation to the shutter 30 (see Fig. 1) or the button 20B (see Fig. 4). However, supply of electric power to the heater 207 needs a precondition that the front panel 10 (see Fig. 1) is attached to the main device 20. By attaching the front panel 10, a temperature transferred to the hand of a user can be decreased as compared to when the front panel 10 is not attached.

When the temperature of the stick substrate 210 heated by the heater 207 reaches a predetermined temperature, inhalation by a user is allowed. Inhalation of an aerosol by a user is detected by a flow sensor or the like of the sensor 202, and is saved in the memory 204.

After that, when the predetermined user input is detected by the sensor 202, supply of electric power to the heater 207 is stopped. A method in which electric power is supplied to the heater 207 in a period during which inhalation by a user is detected by the sensor 202 and electric power supplied to the heater 207 is stopped when inhalation by the user is not detected by the sensor 202 may be adopted.

In the example of Fig. 6, the heater 207 is disposed outside the stick substrate 210. Alternatively, the heater 207 may be a blade-type piece of metal inserted into the stick substrate 210 for use or may be a piece of metal built in the stick substrate 210. When a piece of metal that acts as the heater 207 is built in the stick substrate 210, an induction heating coil just needs to be disposed around the holder 209.

The heat insulator 208 is a member that reduces propagation of heat generated in the heater 207 to surroundings. Therefore, the heat insulator 208 is disposed so as to cover at least the outer periphery of the heater 207.

The heat insulator 208 is made of, for example, a vacuum heat insulator, an aerogel heat insulator, or the like. A vacuum heat insulator is, for example, a heat insulator of which heat conduction by gas is brought close to zero as much as possible by wrapping glass wool, silica (silicon powder), and the like with a resin film into a high-vacuum state.

### <Processing Operation Example>

Hereinafter, a processing operation example that is executed by the controller 206 (see Fig. 6) of the main device 20 will be described.

### <Attachment Detection Operation>

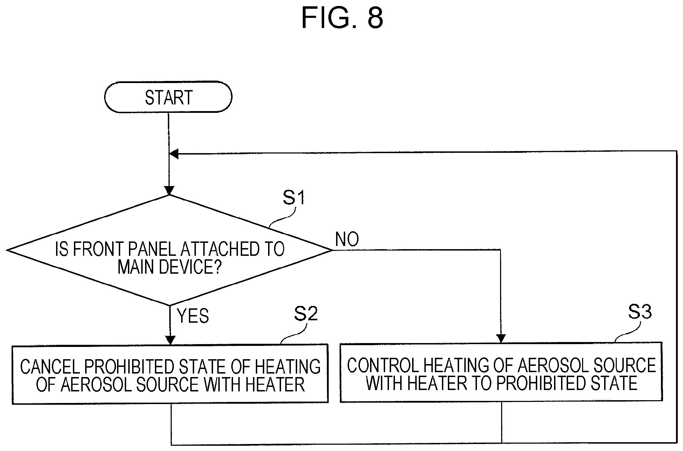

Fig. 8 is a flowchart that illustrates an example of an attachment detection operation for the front panel 10, which is executed by the controller 206 of the main device 20. The operation is an operation that is executed not only before heating operation of the heater 207 (see Fig. 6) is started but also after heating is started and is constantly executed in a background. A sign "S" shown in the drawing means step.

Initially, the controller 206 determines whether the front panel 10 (see Fig. 1) is attached to the main device 20 (see Fig. 1) (step 1).

When the front panel 10 is attached to the main device 20, an affirmative result is obtained in step 1. On the other hand, when removed from the front panel 10 from the front of the main device 20, a negative result is obtained in step 1. Attachment or removal of the front panel 10 is determined in accordance with an output signal of the Hall IC.

When an affirmative result is obtained in step 1, the controller 206 cancels a prohibited state of heating of an aerosol source with the heater 207 (step 2).

However, cancellation of a prohibited state of heating and start of heating are different. Heating of the stick substrate 210 (see Fig. 6) that is an aerosol source is started when the button 20B (see Fig. 4) is pressed from the front panel 10 and held for a second or longer.

When a negative result is obtained in step 1, the controller 206 controls heating of an aerosol source with the heater 207 to a prohibited state (step 3).

When step 2 or step 3 is executed, the controller 206 returns to step 1 and repeats the determination as to whether the front panel 10 is attached to the main device 20.

With this attachment detection operation, a user does not need to directly touch the main device 20 during heating operation.

### <USB Charging Operation>

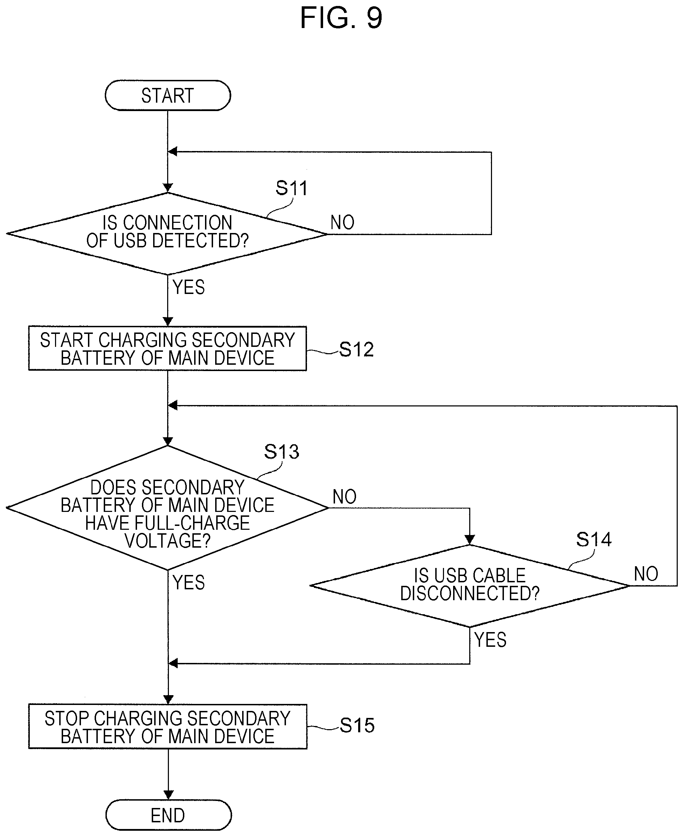

Fig. 9 is a flowchart that illustrates an example of a USB charging operation that is executed by the controller 206 of the main device 20. The USB charging operation is also constantly executed in the background.

Initially, the controller 206 determines whether connection of USB is detected (step 11).

When a USB cable is connected to the USB connector 21 (see Fig. 2), an affirmative result is obtained in step 11. On the other hand, when a USB cable is not connected to the USB connector 21, a negative result is obtained in step 11.

When a negative result is obtained in step 11, the controller 206 repeats the determination of step 11.

On the other hand, when an affirmative result is obtained in step 11, the controller 206 starts charging the secondary battery 201A of the main device 20 (step 12).

Subsequently, the controller 206 determines whether the secondary battery 201A of the main device 20 has a full-charge voltage (step 13).

When the secondary battery 201A has not reached a full state of charge, a negative result is obtained in step 13. On the other hand, when the secondary battery 201A has reached a full state of charge, an affirmative result is obtained in step 13.

When a negative result is obtained in step 13, the controller 206 determines whether the USB cable is removed (step 14).

When the USB cable remains connected, a negative result is obtained in step 14. On the other hand, when the USB cable is disconnected during charging, an affirmative result is obtained in step 14.

When a negative result is obtained in step 14, the controller 206 returns to step 13 and repeats the determination of step 13.

When an affirmative result is obtained in step 13 or when an affirmative result is obtained in step 14, the controller 206 stops charging the secondary battery 201A of the main device 20 (step 15).

After that, the controller 206 ends the USB charging operation.

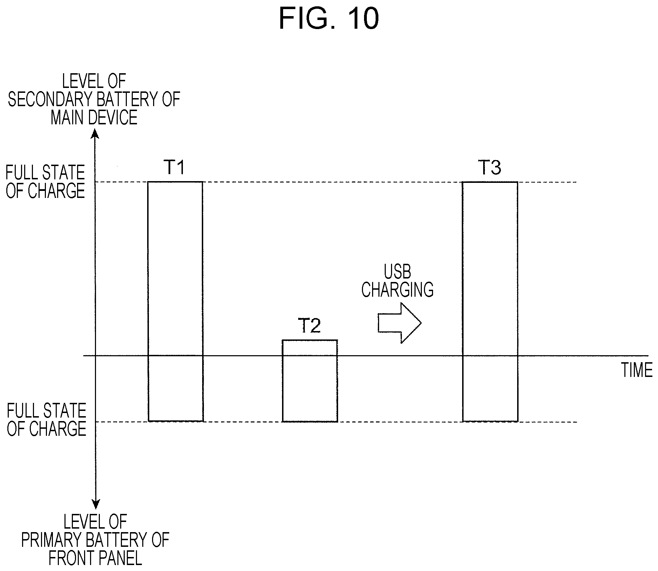

Fig. 10 is a timing chart that illustrates a USB charging operation.

The abscissa axis of the timing chart represents time, the upper half of the ordinate axis represents the level of the secondary battery 201A in the main device 20, and the lower half of the ordinate axis represents the level of the primary battery 101A in the front panel 10.

In the case of Fig. 10, both the primary battery 101A of the front panel 10 and the secondary battery 201A of the main device 20 in an initial state T1 are in a full state of charge.

In the case of time T2, the level of the secondary battery 201A of the main device 20 has decreased from a full state of charge. When the USB cable is connected in this state, USB charging is started. In the case of Fig. 10, the level of the primary battery 101A of the front panel 10 is in a full state of charge; however, it is not limited to a full state of charge.

The secondary battery 201A returns to a full state of charge at time T3 when USB charging ends. Of course, the level of only the secondary battery 201A is recovered.

### <Auxiliary Charging Operation>

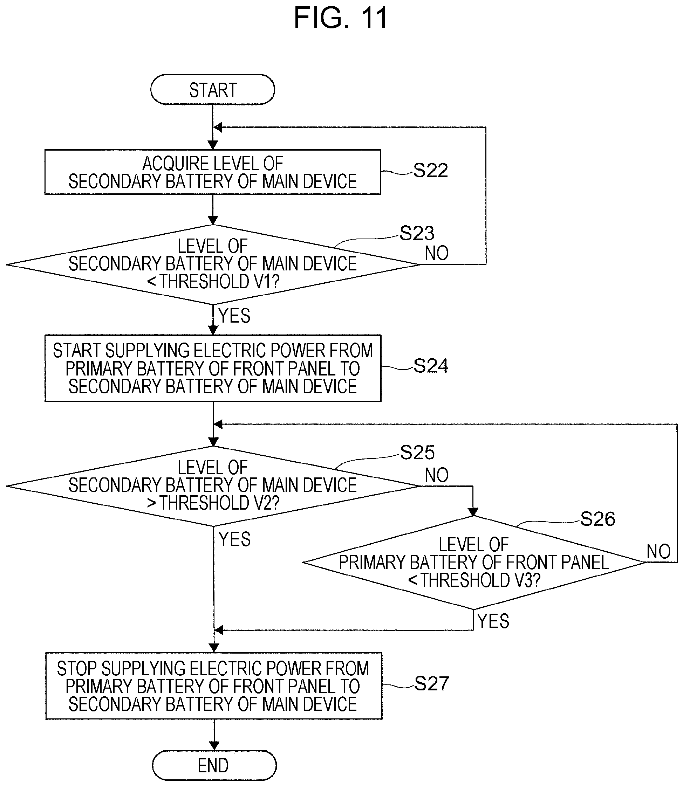

Fig. 11 is a flowchart that illustrates an operation (that is, auxiliary charging) in which the secondary battery 201A (see Fig. 7) of the main device 20 (see Fig. 1) is charged by the primary battery 101A (see Fig. 7) of the front panel 10 (see Fig. 1).

Auxiliary charging in the present embodiment is controlled by the controller 206 (see Fig. 6).

Initially, the controller 206 acquires the level of the secondary battery 201A of the main device 20 (step 22).

Subsequently, the controller 206 determines whether the level of the secondary battery 201A of the main device 20 is lower than a threshold V1 (step 23). The threshold V1 here is an example of a predetermined condition.

When the level is higher than or equal to the threshold V1, a negative result is obtained in step 23. When a negative result is obtained in step 23, the controller 206 returns to step 22.

On the other hand, when the level is lower than the threshold V1 (that is, the predetermined condition is satisfied), an affirmative result is obtained in step 23. In this case, the controller 206 starts supplying electric power from the primary battery 101A of the front panel 10 to the secondary battery 201A of the main device 20 (step 24).

In the case of the present embodiment, the controller 206 instructs the feeder circuit 102 of the front panel 10 to start supplying electric power.

As a result, a voltage boosted to, for example, 5 V is supplied from the output terminal of the feeder circuit 102 to the power supply unit 201B (see Fig. 7) of the main device 20. The power supply unit 201B performs DC-DC conversion from a voltage of 5 V supplied from the primary battery 101A as an external power supply to 4.2 V and supplies 4.2 V to the power supply line to which the secondary battery 201A is connected.

Thus, charging of the secondary battery 201A of the main device 20 is started.

Subsequently, the controller 206 determines whether the level of the secondary battery 201A of the main device 20 is higher than a threshold V2 (> V1) (step 25).

When the level of the secondary battery 201A is lower than or equal to the threshold V2, a negative result is obtained in step 25. On the other hand, when the level of the secondary battery 201A is higher than the threshold V2, an affirmative result is obtained in step 25.

When a negative result is obtained in step 25, the controller 206 determines whether the level of the primary battery 101A of the front panel 10 is lower than a threshold V3 (step 26). The threshold V3 here defines the timing to stop supplying electric power from the front panel 10 to the main device 20.

When the level of the primary battery 101A of the front panel 10 is higher than or equal to the threshold V3, a negative result is obtained in step 26. In this case, the controller 206 returns to step 25. On the other hand, when the level of the primary battery 101A of the front panel 10 is lower than the threshold V3, an affirmative result is obtained in step 26.

When an affirmative result is obtained in step 25 or when an affirmative result is obtained in step 26, the controller 206 stops supplying electric power from the primary battery 101A of the front panel 10 to the secondary battery 201A of the main device 20 (step 27). In the case of the present embodiment, the controller 206 instructs the feeder circuit 102 of the front panel 10 to stop supplying electric power.

Here, a case where an affirmative result is obtained in step 25 is a case where the level of the secondary battery 201A of the main device 20 is recovered to a target level. On the other hand, a case where an affirmative result is obtained in step 26 is a case where the level of the primary battery 101A of the front panel 10 is low.

After that, the controller 206 ends charging the secondary battery 201A of the main device 20 using the primary battery 101A of the front panel 10 as an external power supply.

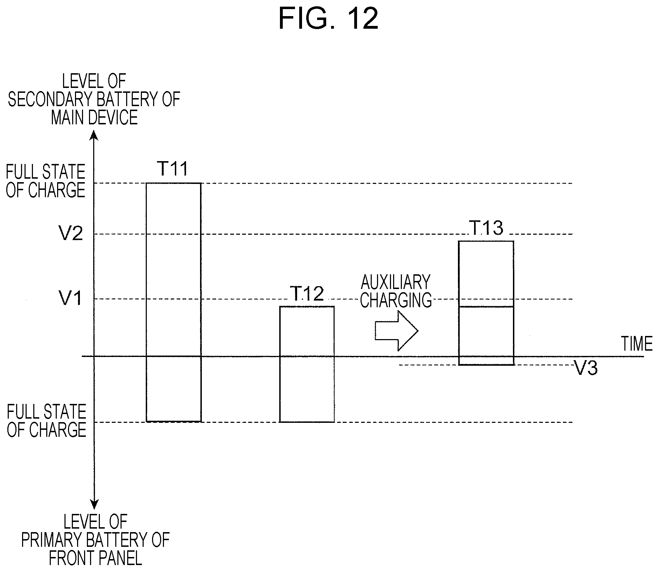

Fig. 12 is a timing chart that illustrates auxiliary charging that uses the primary battery 101A of the front panel 10 as an external power supply.

The abscissa axis of the timing chart represents time, the upper half of the ordinate axis represents the level of the secondary battery 201A in the main device 20, and the lower half of the ordinate axis represents the level of the primary battery 101A in the front panel 10.

In the case of Fig. 12, the primary battery 101A and the secondary battery 201A in an initial state T11 both are in a full state of charge.

Time T12 of Fig. 12 indicates a state where the level of the secondary battery 201A of the main device 20 is lower than the threshold V1. The primary battery 101A of the front panel 10 remains in a full state of charge. The level of the primary battery 101A of the front panel 10 can be decreased.

Auxiliary charging is started from time T12. By performing auxiliary charging, the level of the primary battery 101A of the front panel 10 decreases, while, on the other hand, the level of the secondary battery 201A of the main device 20 increases.

In the case of Fig. 12, charging is stopped because the level of the primary battery 101A of the front panel 10 serving as an external power supply is lower than the threshold V3 although the level of the secondary battery 201A of the main device 20 has not reached the threshold V2.

### <Summary>

As described above, the front panel 10 that has the built-in primary battery 101A can be attached to the main device 20 (see Fig. 1) described in the present embodiment. When the front panel 10 that has the built-in primary battery 101A is attached to the main device 20, the secondary battery 201A of the main device 20 can be charged by using the primary battery 101A as an external power supply. As a result, the usage time of the main device 20 is longer than that in a case where the front panel 10 that does not have the built-in primary battery 101A is attached.

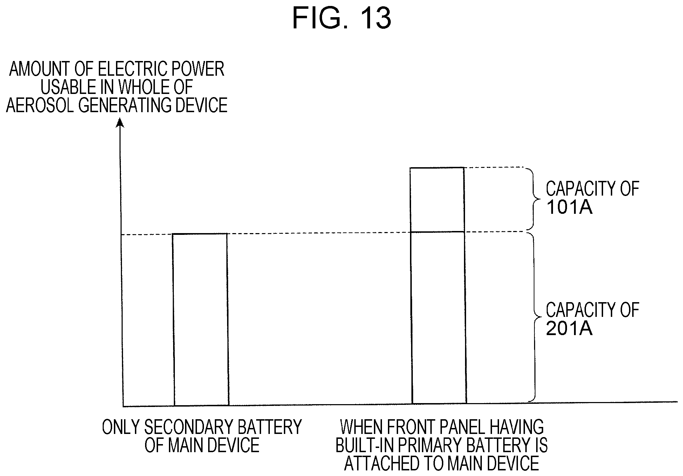

Fig. 13 is a graph that illustrates the amount of electric power usable in the whole of the aerosol generating device 1.

The ordinate axis of the graph represents the amount of electric power usable in the whole of the aerosol generating device 1.

As illustrated in Fig. 13, as compared to the case of only the secondary battery 201A of the main device 20, the amount of electric power usable increases when the front panel 10 that has the built-in primary battery 101A is attached to the main device 20.

### <Second Embodiment>

In the present embodiment, a case where electric power supplied from the primary battery 101A of the front panel 10 is used for other than charging of the secondary battery 201A of the main device 20 will be described.

The internal configuration and appearance configuration of the aerosol generating device 1 are common to those of the first embodiment.

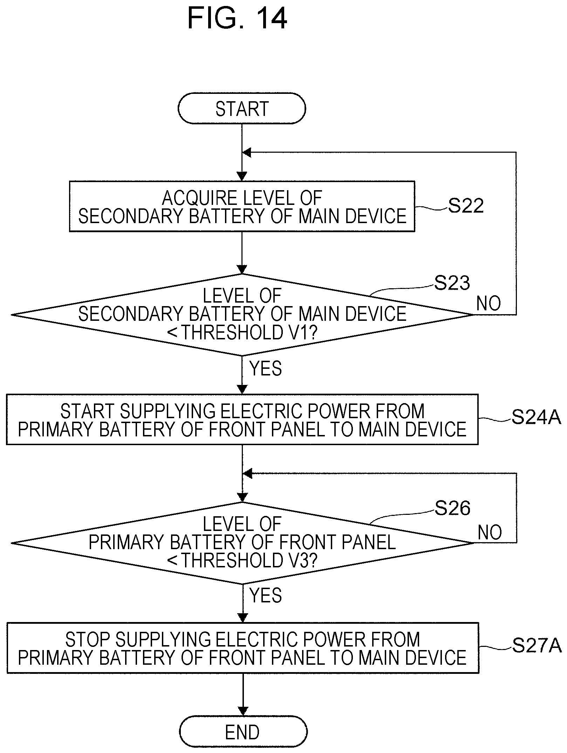

Fig. 14 is a flowchart that illustrates another example of a processing operation that uses the front panel 10 as an auxiliary power supply. Fig. 14 assigns corresponding reference signs to corresponding parts of Fig. 11.

The processing operation illustrated in Fig. 14 is executed by the controller 206 (see Fig. 6) as background processing.

In the case of the present embodiment, the controller 206 acquires the level of the secondary battery 201A of the main device 20 regardless of the presence or absence of a request to generate an aerosol (step 22) and determines whether the level of the secondary battery 201A of the main device 20 is lower than the threshold V1 (step 23). Acquisition of the level of the secondary battery 201A in step 22 is performed, for example, at predetermined timing. Acquisition of the level is performed, for example, at the timing when the power of the main device 20 is operated to an on state, the timing when a predetermined time has elapsed from the last acquisition, or the timing when a request to generate an aerosol is detected.

When the level is higher than or equal to the threshold V1, a negative result is obtained in step 23. When a negative result is obtained in step 23, the controller 206 returns to step 22.

On the other hand, when the level is lower than the threshold V1 (that is, the predetermined condition is satisfied), an affirmative result is obtained in step 23. In this case, the controller 206 starts supplying electric power from the primary battery 101A of the front panel 10 to the main device 20 (step 24A). In the case of the present embodiment as well, the controller 206 instructs the feeder circuit 102 of the front panel 10 to start supplying electric power. Electric power supplied from the front panel 10 is converted to a predetermined voltage by the power supply unit 201B of the main device 20 and is distributed in the device.

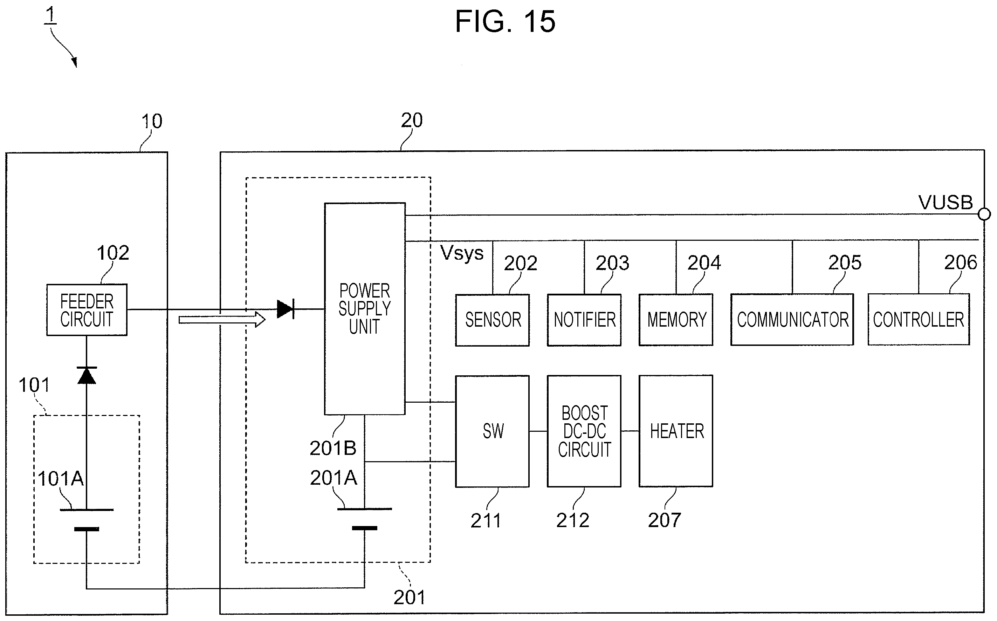

Fig. 15 is a diagram that illustrates a connection example between power supply lines and sections in the main device 20.

Fig. 15 assigns corresponding reference signs to corresponding parts of Fig. 11.

The power supply unit 201B in the present embodiment supplies a system power supply Vsys of 3.3 V generated by supply of electric power from the front panel 10 to the sensor 202, the notifier 203, the memory 204, the communicator 205, and the controller 206. The sensor 202 and the like here are examples of the component other than the heater. The power supply unit 201B may include a circuit that switches generation of a system power supply Vsys using the secondary battery 201A as a power supply and a system power supply Vsys using the primary battery 101A of the front panel 10 as a power supply. Alternatively, a power supply may be configured to be switchable by respectively connecting dedicated load switches to the two system power supplies Vsys.

The power supply unit 201B in the present embodiment supplies a load switch 211 with, for example, a power supply of 4.2 V generated by supply of electric power from the front panel 10.

The load switch 211 in the present embodiment operates as a switch that connects any one of the output voltage of the secondary battery 201A and the output voltage of the front panel 10 to a boost DC-DC circuit 212.

The load switch 211 is, for example, a MOS FET and is prepared one by one for each power supply. When, for example, electric power is supplied from the secondary battery 201A to the heater 207, the MOS FET connected to the output voltage of the front panel 10 is controlled to an off state, and the MOS FET connected to the secondary battery 201A is controlled to an on state. On the contrary, when electric power is supplied from the front panel 10 to the heater 207, the MOS FET connected to the output voltage of the front panel 10 is controlled to an on state, and the MOS FET connected to the secondary battery 201A is controlled to an off state.

When electric power is supplied from both the primary battery 101A of the front panel 10 and the secondary battery 201A of the main device 20 to the heater 207, the output voltages of the two batteries are combined in an equalized state and supplied to the boost DC-DC circuit 212.

Here, to equalize the output voltages of the batteries, a buck-boost DC-DC circuit for the primary battery 101A and a buck-boost DC-DC circuit for the secondary battery 201A are prepared.

To combine two output voltages, for example, a current balance control IC is used.

The boost DC-DC circuit 212 boosts an input voltage to, for example, 4.97 V.

The description returns to the description of Fig. 14.

The controller 206 having provided instructions to supply electric power from the primary battery 101A of the front panel 10 determines whether the level of the primary battery 101A of the front panel 10 is lower than the threshold V3 (step 26).

While a negative result is obtained in step 26, the controller 206 repeats the determination of step 26.

On the other hand, when an affirmative result is obtained in step 26, the controller 206 stops supplying electric power from the primary battery 101A of the front panel 10 to the main device 20 (step 27A).

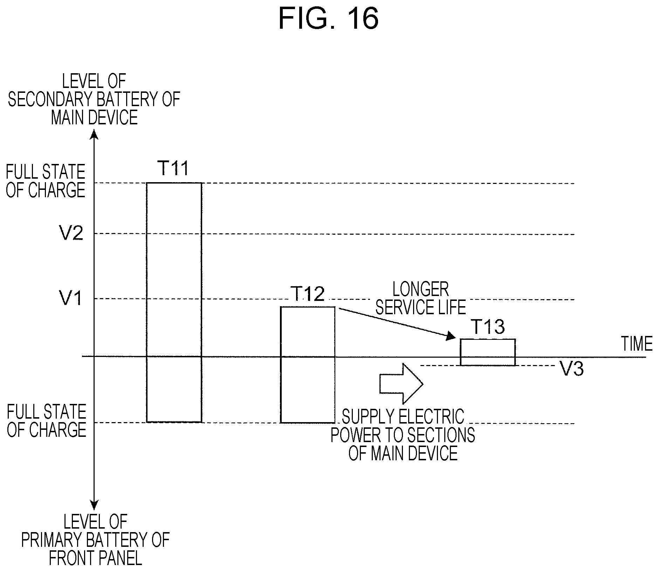

Fig. 16 is a timing chart that illustrates supply of electric power to the main device 20 using the primary battery 101A of the front panel 10 as an external power supply.

The abscissa axis of the timing chart represents time, the upper half of the ordinate axis represents the level of the secondary battery 201A in the main device 20, and the lower half of the ordinate axis represents the level of the primary battery 101A in the front panel 10.

In the case of Fig. 16, the primary battery 101A and the secondary battery 201A in an initial state T11 both are in a full state of charge.

Time T12 of Fig. 16 indicates a state where the level of the secondary battery 201A of the main device 20 is lower than the threshold V1. The primary battery 101A of the front panel 10 remains in a full state of charge. The level of the primary battery 101A of the front panel 10 can be decreased.

Supply of electric power to the sections of the main device 20 is started from time T12. The level of the primary battery 101A of the front panel 10 decreases due to the start of supplying electric power.

On the other hand, a decrease in the level of the secondary battery 201A of the main device 20 is small. When, for example, supply of electric power to the heater 207 having a large power consumption is switched to supply of electric power from the front panel 10, the secondary battery 201A is used as a power supply for a system power supply Vsys. As a result, it is possible to extend the service life of the secondary battery 201A. When supply of electric power to components that operate on the system power supply Vsys is switched to supply of electric power from the front panel 10 as well, it is possible to cause the front panel 10 side to share power consumption for these components. As a result, it is possible to extend the service life of the secondary battery 201A.

### <Summary>

As described above, in the present embodiment, electric power supplied from the primary battery 101A of the front panel 10 is used for applications other than charging of the secondary battery 201A (see Fig. 15) of the main device 20 (see Fig. 1). Therefore, as compared to a case where supply of electric power cannot be received from the front panel 10, it is possible to extend a time during which the secondary battery 201A of the main device 20 can supply electric power.

### <Third Embodiment>

In the present embodiment, a case where a secondary battery is used as the battery of the front panel 10 will be described.

The appearance configuration of the aerosol generating device 1 is common to the first embodiment.

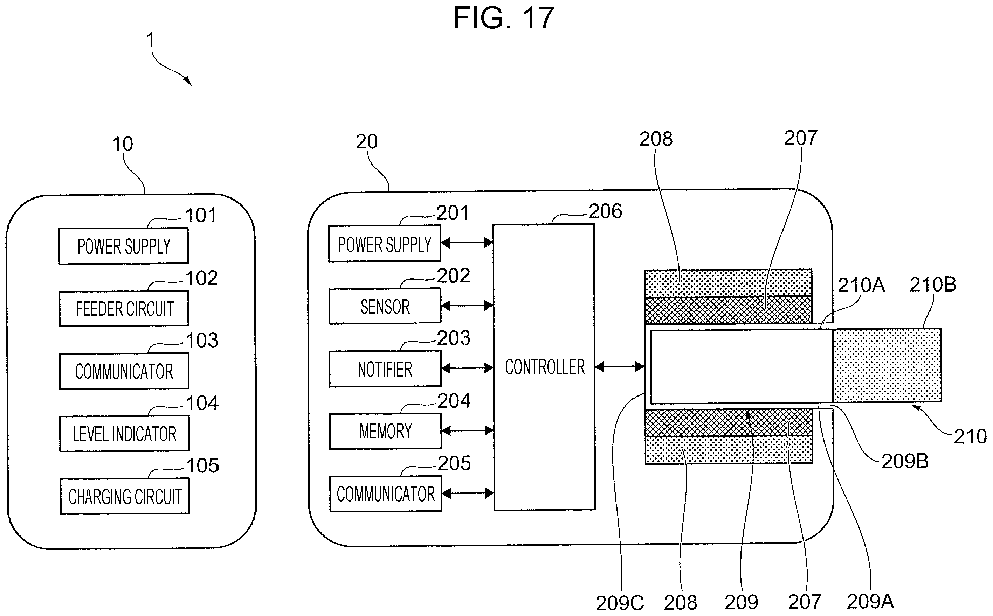

Fig. 17 is a diagram that schematically illustrates the internal configuration of the aerosol generating device 1 according to the third embodiment. 17 assigns corresponding reference signs to corresponding parts of Fig. 6.

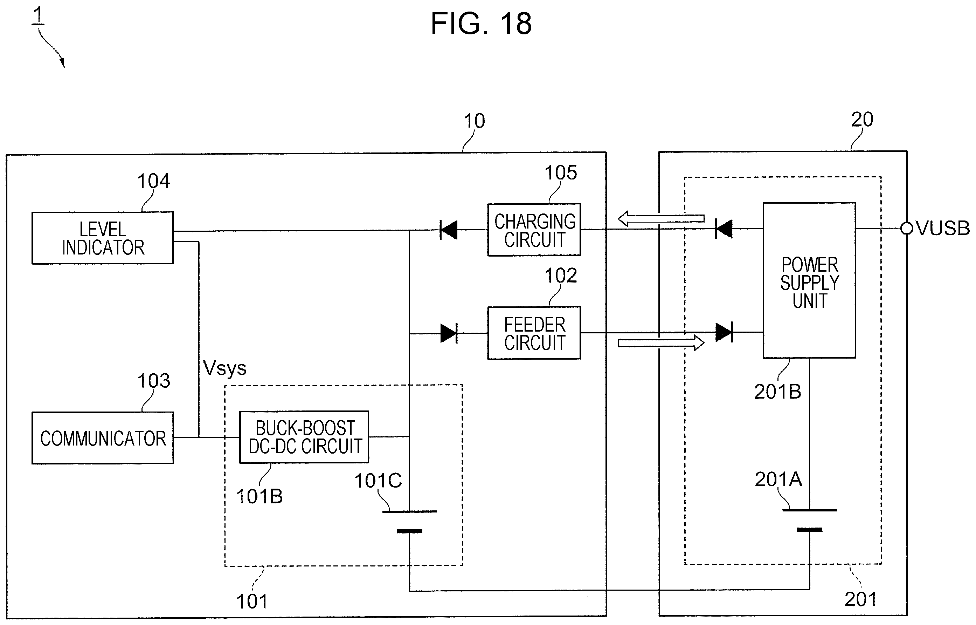

Fig. 18 is a diagram that schematically illustrates a connection relation between the front panel 10 and a power supply system circuit in the main device 20 in the third embodiment. Fig. 18 assigns corresponding reference signs to corresponding parts of Fig. 7.

In the case of the aerosol generating device 1 in the present embodiment, a secondary battery 101C is used as the battery of the front panel 10. A charging circuit 105 that charges the power supply 101 with electric power supplied from the main device 20 is added to the front panel 10. The other configuration is the same as that of the first embodiment.

The charging circuit 105 is made up of, for example, a boost DC-DC circuit. The charging circuit 105 in the present embodiment is a circuit that supplies a voltage of, for example, 4.2 V to the secondary battery 101C when electric power is supplied from the main device 20. A circuit that prevents backflow of current is provided in the charging circuit 105.

In this regard, supply of electric power from the main device 20 to the charging circuit 105 may be contact power supply or contactless power supply.

Hereinafter, a processing operation example peculiar to the present embodiment will be described.

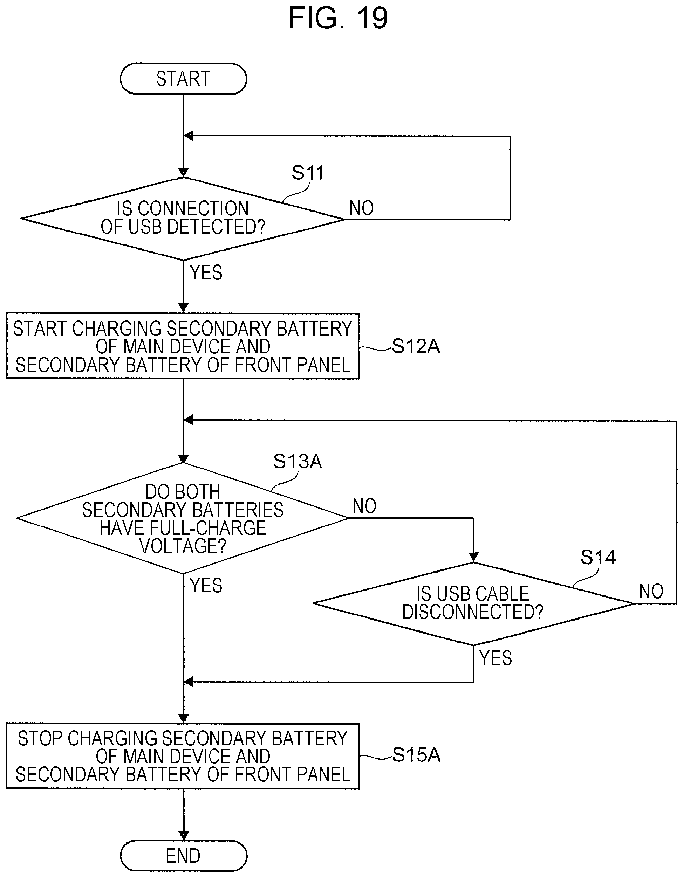

Fig. 19 is a flowchart that illustrates an example of a USB charging operation that is executed by the controller 206 of the main device 20. Fig. 19 assigns corresponding reference signs to corresponding parts of Fig. 9.

Initially, the controller 206 determines whether connection of USB is detected (step 11).

When a negative result is obtained in step 11, the controller 206 repeats the determination of step 11.

On the other hand, when an affirmative result is obtained in step 11, the controller 206 starts charging the secondary battery 201A of the main device 20 and the secondary battery 101C of the front panel 10 (step 12A). Actual charging may adopt a method in which any one of the secondary battery 201A of the main device 20 and the secondary battery 101C of the front panel 10 is charged to a full capacity first and subsequently the other one is charged to a fully capacity. The secondary battery 201A of the main device 20 and the secondary battery 101C of the front panel 10 may be charged in parallel.

Subsequently, the controller 206 determines whether the two secondary batteries each have a full-charge voltage (step 13A).

When a negative result is obtained in step 13A, the controller 206 determines whether the USB cable is disconnected (step 14).

When a negative result is obtained in step 14, the controller 206 returns to step 13A and repeats the determination of step 13A.

When an affirmative result is obtained in step 13A or when an affirmative result is obtained in step 14, the controller 206 stops charging the secondary battery 201A of the main device 20 and the secondary battery 101C of the front panel 10 (step 15A).

After that, the controller 206 ends the USB charging operation.

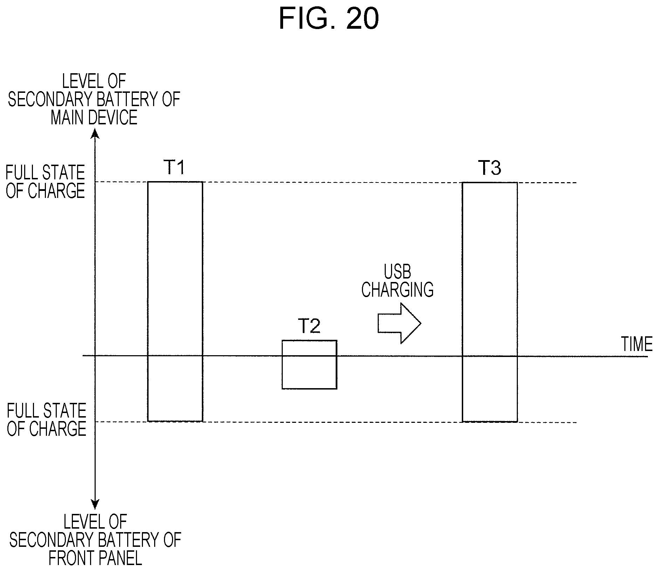

Fig. 20 is a timing chart that illustrates a USB charging operation.

The abscissa axis of the timing chart represents time, the upper half of the ordinate axis represents the level of the secondary battery 201A in the main device 20, and the lower half of the ordinate axis represents the level of the secondary battery 101C in the front panel 10.

In the case of Fig. 20, both the secondary battery 101C of the front panel 10 and the secondary battery 201A of the main device 20 in an initial state T1 are in a full state of charge.

In the case of time T2, both the level of the secondary battery 101C of the front panel 10 and the level of the secondary battery 201A of the main device 20 have decreased from a full state of charge. When the USB cable is connected in this state, USB charging is started.

At time T3 when USB charging ends, both the secondary battery 101C of the front panel 10 and the secondary battery 201A of the main device 20 return to a full state of charge.

### <Summary>

As described above, in the present embodiment, the secondary battery 101C is adopted as the battery built in the front panel 10. Therefore, when a USB cable is connected to the main device 20 (see Fig. 1) to which the front panel 10 is attached, it is possible to charge not only the secondary battery 201A in the main device 20 but also the secondary battery 101C of the front panel 10 together.

Therefore, the amount of electric power usable in the aerosol generating device 1 after USB charging increases as compared to the case where the front panel 10 with no built-in battery or the front panel 10 with a built-in primary battery 101A is attached to the main device 20.

As a result, it is possible to extend the usage time of the aerosol generating device 1. As in the case of the second embodiment, electric power supplied from the secondary battery 101C of the front panel 10 may be used for other than charging of the secondary battery 201A of the main device 20.

### <Fourth Embodiment>

In the present embodiment, a case where, when the level of the secondary battery 201A in the main device 20 is not sufficient to use up an unused stick substrate 210 (see Fig. 6), generation of an aerosol is enabled by receiving supply of electric power from the front panel 10 will be described.

An unused stick substrate 210 here means a stick substrate 210 yet to be heated even once. Therefore, when a stick substrate 210 has been inserted in the hole 22 of the main device 20 but has not been heated yet, the stick substrate 210 is unused. In other words, an unused stick substrate 210 is a new stick substrate 210.

The phrase "the level of the battery is sufficient to use up an unused stick substrate 210", for example, means that the amount of electric power needed to generate an estimated amount of aerosol from an unused stick substrate 210 is left.

The estimated amount here, for example, may be defined in accordance with the amount of aerosol source included in an unused stick substrate 210, may be defined in accordance with a control profile of the heater 207, or may be defined according to the version and component configuration of the main device 20. The control profile defines the timing of heating operation and a change in target temperature after the start of heating operation.

When a plurality of control profiles is prepared in the main device 20 and a user is able to select which control profile is used to generate an aerosol, an estimated amount is defined according to the control profile or heating mode selected by the user.

When, for example, a heating mode in which the amount of aerosol generated increases but electric power consumption increases (hereinafter, referred to as "high mode") and a heating mode in which the amount of aerosol generated is a standard amount but electric power consumption is allowed to be small (hereinafter, referred to as "normal mode"), an estimated amount is defined in the heating mode currently selected.

Even when the level of the battery is short to generate an estimated amount in the case of the high mode but the level of the battery is sufficient to generate an estimated amount in the case of the normal mode, this information may be presented by using the notifier 203.

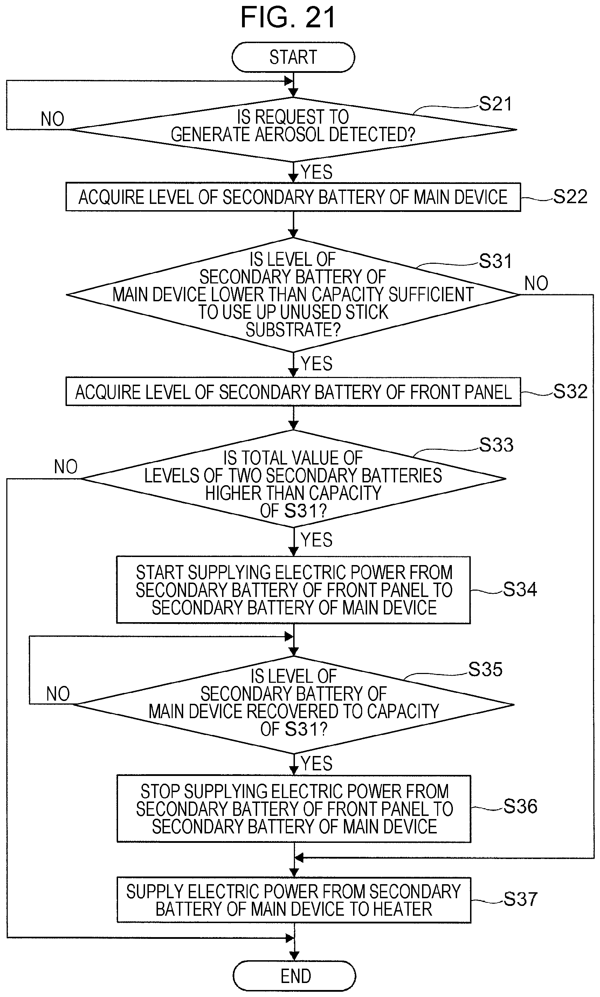

Fig. 21 is a flowchart that illustrates an example of a processing operation example in the fourth embodiment. Fig. 21 assigns corresponding reference signs to corresponding parts of Fig. 11.

The processing operation illustrated in Fig. 21 is executed by the controller 206 (see Fig. 6) of the main device 20.

Initially, the controller 206 determines whether a request to generate an aerosol is detected (step 21).

When a negative result is obtained in step 21, the controller 206 repeats the determination of step 21.

On the other hand, when an affirmative result is obtained in step 41, the controller 206 acquires the level of the secondary battery 201A of the main device 20 (step 22).

Subsequently, the controller 206 determines whether the level of the secondary battery 201A of the main device 20 is lower than a capacity sufficient to use up an unused stick substrate 210 (step 31).

When the level of the secondary battery 201A is higher than a reference capacity, a negative result is obtained in step 31. In this case, the controller 206 supplies electric power from the secondary battery 201A of the main device 20 to the heater 207 (step 37). In other words, generation of an aerosol using the secondary battery 201A of the main device 20 is started.

In contrast, when the level of the secondary battery 201A is lower than the reference capacity, an affirmative result is obtained in step 31. In this case, the controller 206 acquires the level of the secondary battery 101C of the front panel 10 (step 32). The level here is acquired from the level indicator 104 (see Fig. 7).

Subsequently, the controller 206 determines whether the total value of the levels of the two batteries is higher than the capacity of step 31 (step 33).

When the total value of the levels of the two batteries is lower than the capacity of step 31, a negative result is obtained in step 33. In this case, the controller 206 ends the process without starting heating operation.

On the other hand, when the total value of the levels of the two batteries is higher than the capacity of step 31, an affirmative result is obtained in step 33.

In this case, the controller 206 starts supplying electric power from the secondary battery 101C of the front panel 10 to the secondary battery 201A of the main device 20 (step 34).

Subsequently, the controller 206 determines whether the level of the secondary battery 201A of the main device 20 is recovered to the capacity of step 31 (step 35).

When recovery of the capacity is not found, a negative result is obtained in step 35. In this case, the controller 206 repeats the determination of step 35.

On the other hand, when recovery of the capacity is found, an affirmative result is obtained in step 35. In this case, the controller 206 stops supplying electric power from the secondary battery 101C of the front panel 10 to the secondary battery 201A of the main device 20 (step 36).

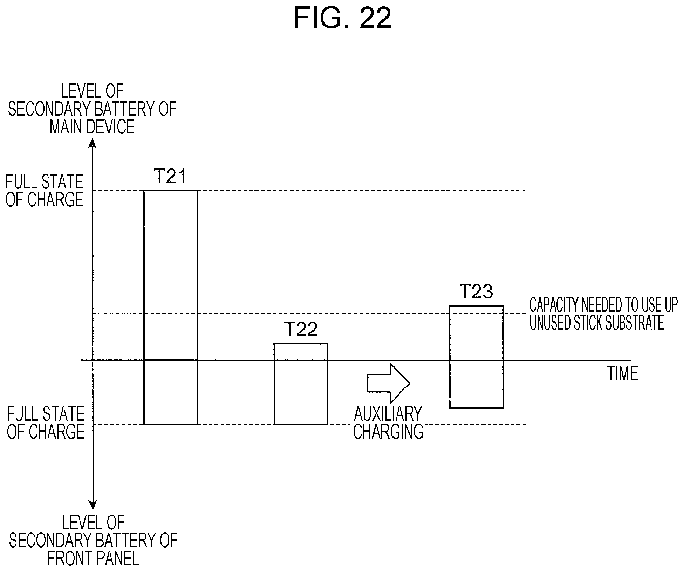

Fig. 22 is a timing chart that illustrates auxiliary charging that uses the battery of the front panel 10 as an external power supply.

The abscissa axis of the timing chart represents time, the upper half of the ordinate axis represents the level of the secondary battery 201A in the main device 20, and the lower half of the ordinate axis represents the level of the secondary battery 101C in the front panel 10.

In the case of time T21, both the secondary battery 101C of the front panel 10 and the secondary battery 201A of the main device 20 are in a full state of charge.

At time T22 of Fig. 22, a state where the level of the secondary battery 201A of the main device 20 is lower than the capacity needed to use up an unused stick substrate 210 is illustrated. The secondary battery 101C of the front panel 10 remains in a full state of charge. The level of the battery of the front panel 10 can be decreased.

In any case, when the level of the secondary battery 101C of the front panel 10 is used, it is possible to recover the level of the secondary battery 201A of the main device 20.

Auxiliary charging is started from time T22. By performing auxiliary charging, the level of the secondary battery 101C of the front panel 10 decreases, while, on the other hand, the level of the secondary battery 201A of the main device 20 increases.

At time T23, charging is stopped at the time when the level of the secondary battery 201A of the main device 20 is recovered to the capacity needed to use up an unused stick substrate 210.

After that, the controller 206 supplies electric power from the secondary battery 201A of the main device 20 to the heater 207 (step 37).

### <Summary>

As described above, in the case of the present embodiment, even in a state where the level of the secondary battery 201A of the main device 20 is lower than the capacity needed to use up an unused stick substrate 210, the capacity of the secondary battery 201A of the main device 20 is recovered by using the secondary battery 101C of the front panel 10, so it is possible to use up an unused stick substrate 210 even when heating operation is started.

When the capacity of the secondary battery 201A of the main device 20 cannot be recovered even when the secondary battery 101C of the front panel 10 is used, heating operation of the heater 207 is not started. Thus, heating operation ends before an unused stick substrate 210 is used up, and it is possible to avoid a situation that disposal of the stick substrate 210 occurs before happens.

### <Fifth Embodiment>

In the present embodiment, a correction function for the amount of electric power usable, that is, the level of the secondary battery 101C of the front panel 10, according to a difference in a power supply path from the front panel 10 to the main device 20 will be described.

The internal configuration and appearance configuration of the aerosol generating device 1 are common to those of the third embodiment.

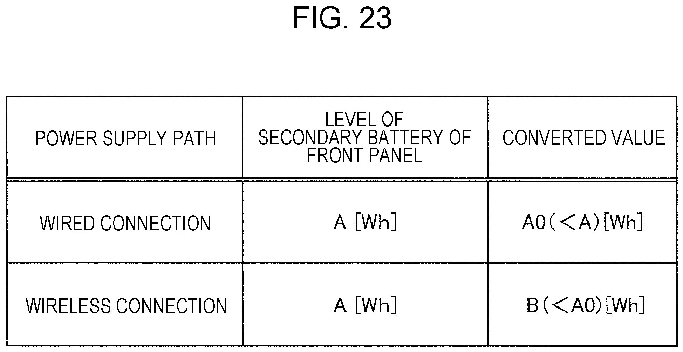

Fig. 23 is a table that illustrates a relationship between the level of the secondary battery 101C of the front panel 10 used as an auxiliary power supply and a level usable in the main device 20.

The table illustrated in Fig. 23 shows a case where a power supply path is wired connection and a case where a power supply path is wireless connection. Only any one of wired connection and wireless connection is used to supply electric power between the front panel 10 and the main device 20. Therefore, a relation according to a power supply path used just needs to be saved in the controller 206.

Basically, the power supply efficiency of wired connection is higher than the power supply efficiency of wireless connection, and losses in a power supply line can be mostly ignored.

Therefore, in the example of Fig. 23, when the level of the secondary battery 101C of the front panel 10 is A [Wh], a converted value of electric power usable in the main device 20 is A0 (< A) [Wh]. For example, A0 is substantially 90% of A.

On the other hand, in the case of wireless connection, even when the level of the secondary battery 101C of the front panel 10 is A [Wh], a converted value of electric power usable in the main device 20 is B (< A0) [Wh]. A converted value B here depends on power supply efficiency.

For example, in the case of an electromagnetic induction method or an electric field coupling method, the power supply efficiency is lower than or equal to about 90%. In the case of a magnetic resonance method, the power supply efficiency is lower than or equal to about 60%.

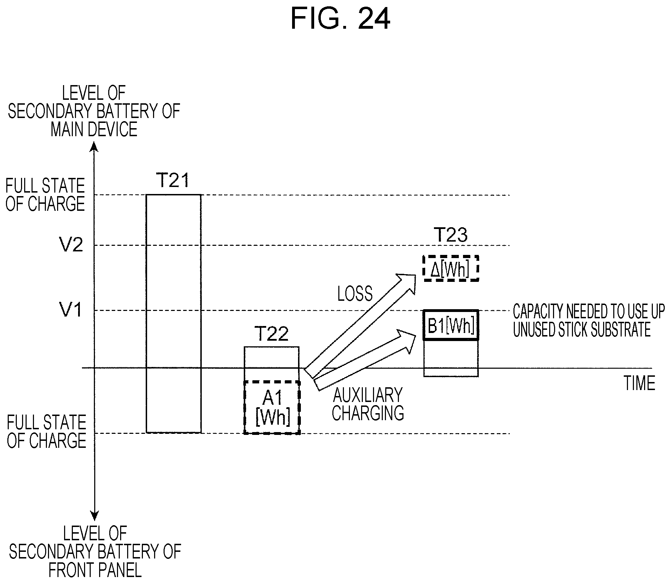

Fig. 24 is a timing chart that illustrates a loss of electric power resulting from auxiliary charging. Fig. 24 assigns corresponding reference signs to corresponding parts of Fig. 22.

In the case of Fig. 24, the amount of electric power consumed by auxiliary charging at time T22 is A1 [Wh].

However, when a loss of electric power in a power supply path from the front panel 10 to the main device 20 is taken into consideration, the amount of electric power that contributes to recovery of electric power of the secondary battery 201A of the main device 20 is B1 [Wh]. In other words, a difference Δ (= A1 - B1) does not contribute to recovery of electric power of the secondary battery 201A of the main device 20. Therefore, in the determination of step 33 (see Fig. 21), a loss in a power supply path needs to be taken into consideration.

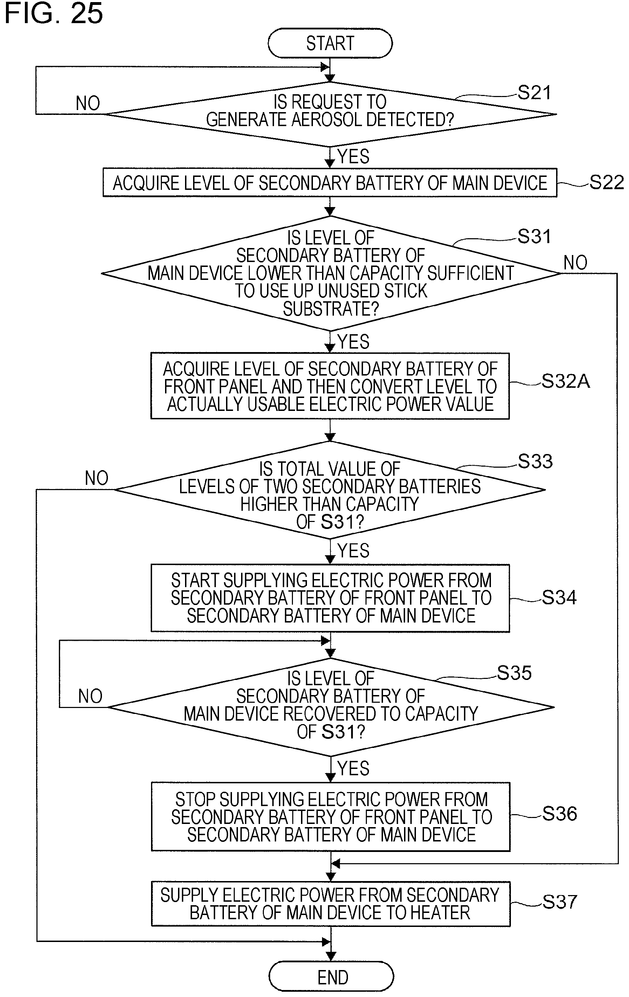

Fig. 25 is a flowchart that illustrates auxiliary charging in the fifth embodiment. Fig. 25 assigns corresponding reference signs to corresponding parts of Fig. 21.

Auxiliary charging illustrated in Fig. 25 differs from auxiliary charging illustrated in Fig. 21 in that step 32A is executed instead of step 32. The other processing operation is the same as that of auxiliary charging illustrated in Fig. 21.

The controller 206 in the present embodiment in step 32A acquires the level of the secondary battery 101C of the front panel 10 and then converts the level to an actually usable electric power value. The conversion process here uses a relational expression according to the characteristics of the power supply path.

### <Summary>

In the case of the present embodiment, since the level of the secondary battery 101C of the front panel 10 is calculated in consideration of a loss of electric power in the power supply path, when supply of electric power from the front panel 10 to the main device 20 is started, it is possible to reliably recover a sufficient amount of electric power to use up an unused stick substrate 210.

### <Sixth Embodiment>

In the present embodiment, an example in which whether the secondary battery 201A of the main device 20 is short in level is determined regardless of a request to generate an aerosol and charging of the secondary battery 201A is started in preparation for inhalation in the future when shortage of the level is estimated will be described.

The internal configuration and appearance configuration of the aerosol generating device 1 are common to those of the first embodiment.

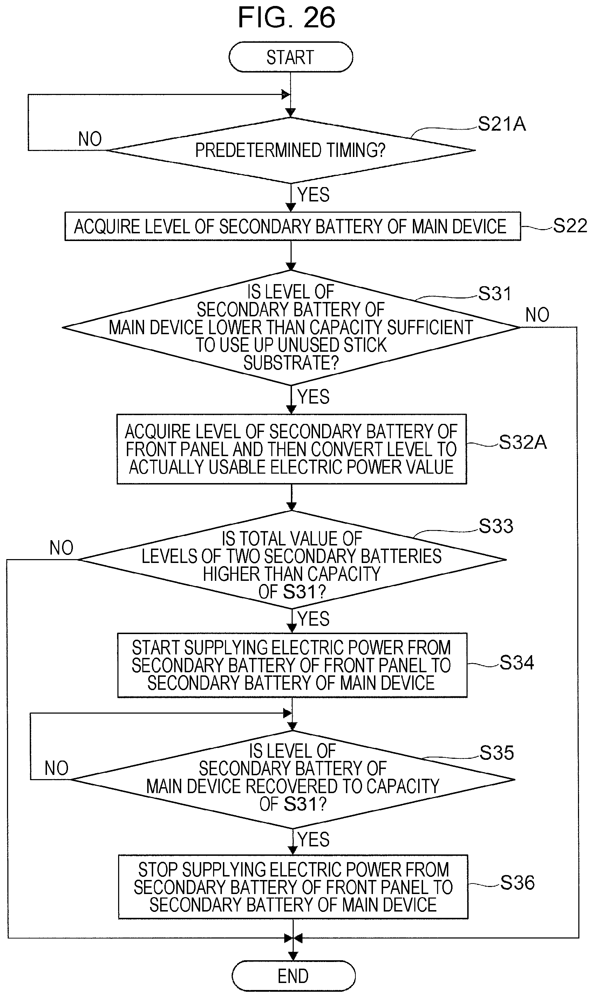

Fig. 26 is a flowchart that illustrates an example of a processing operation example in the sixth embodiment. Fig. 26 assigns corresponding reference signs to corresponding parts of Fig. 25.

The processing operation illustrated in Fig. 26 is executed by the controller 206 of the main device 20.

In the case of the present embodiment, the controller 206 of the main device 20 determines whether it is predetermined timing (step 21A).

Examples of the predetermined timing include a case where the number of stick substrates 210 inhaled after fully charging the secondary battery 201A of the main device 20 has reached a reference value (for example, 10), a case where a predetermined number of times of heating start operation is detected, time set by a timer (for example, six o'clock every morning), and a user's non-inhalation time specified by machine learning. As another condition of the predetermined timing, a condition that a difference ΔC (= FC1 - FC2) between a full charge capacity FC1 of the secondary battery 201A of the main device 20 side and a full charge capacity FC2 of the secondary battery 101C of the front panel 10 side is higher than a current capacity C of the secondary battery 201A of the main device 20 side may be desired to be satisfied.

In the determination of step 21A, when it is not the predetermined timing, the controller 206 of the main device 20 side obtains a negative result in step 21A. In this case, the controller 206 repeats the determination of step 21A.

On the other hand, in the determination of step 21A, when it is the predetermined timing, the controller 206 of the main device 20 side obtains an affirmative result in step 21A.

In this case, the controller 206 acquires the level of the secondary battery 201A of the main device 20 regardless of a generation request from a user (step 22).

Subsequently, the controller 206 determines whether the level of the secondary battery 201A of the main device 20 is lower than a capacity sufficient to use up an unused stick substrate 210 (step 31).

When a negative result is obtained in step 31, it is not necessary to charge the secondary battery 201A. Therefore, the controller 206 ends the process without performing predictive auxiliary charging.

On the other hand, when an affirmative result is obtained in step 31, the controller 206 acquires the level of the secondary battery 101C of the front panel 10 and then converts the level to an actually usable electric power value (step 32A).

Subsequently, the controller 206 determines whether the total value of the levels of the two secondary batteries is higher than the capacity of step 31 (step 33).

When a negative result is obtained in step 33, the level of the secondary battery 201A of the main device 20 is not recovered to a capacity needed even when auxiliary charging is performed. Therefore, the controller 206 ends the process without performing auxiliary charging based on preliminary estimation. The necessity of USB charging may be notified to a user.

When an affirmative result is obtained in step 33, the controller 206 starts supplying electric power from the secondary battery 101C of the front panel 10 to the secondary battery 201A of the main device 20 (step 34).

Subsequently, the controller 206 determines whether the level of the secondary battery 201A of the main device 20 is recovered to the capacity of step 31 (step 35).

When recovery of the capacity is not found, a negative result is obtained in step 35. In this case, the controller 206 repeats the determination of step 35.

On the other hand, when recovery of the capacity is found, an affirmative result is obtained in step 35. In this case, the controller 206 stops supplying electric power from the secondary battery 101C of the front panel 10 to the secondary battery 201A of the main device 20 (step 36). This stop instructions are notified from the controller 206 to the feeder circuit 102.

### <Summary>

In the present embodiment, shortage in the level of the secondary battery 201A of the main device 20 is resolved before a request to generate an aerosol from a user. As a result, a user is able to start inhaling an aerosol from time desired.

### <Seventh Embodiment>

In the present embodiment, an example in which auxiliary charging of the secondary battery 201A of the main device 20 is started regardless of an excess or shortage of the total level of the two secondary batteries will be described.

The internal configuration and appearance configuration of the aerosol generating device 1 are common to those of the first embodiment.

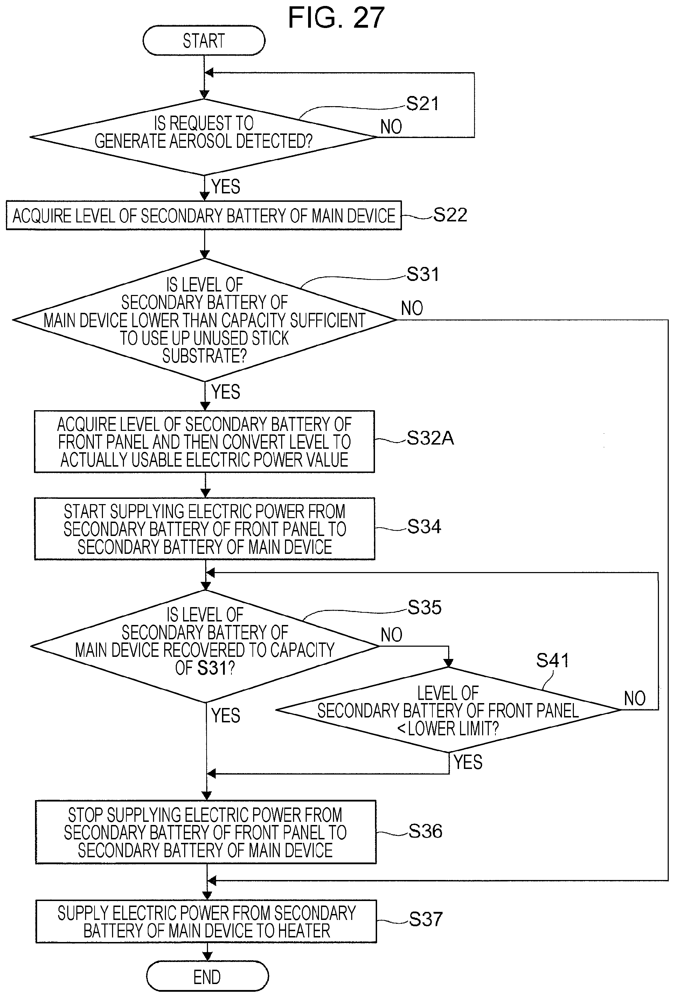

Fig. 27 is a flowchart that illustrates an example of auxiliary charging in the seventh embodiment. Fig. 27 assigns corresponding reference signs to corresponding parts of Fig. 25.

Initially, the controller 206 determines whether a request to generate an aerosol is detected (step 21). When a negative result is obtained in step 21, the controller 206 repeats the determination of step 21.

On the other hand, when an affirmative result is obtained in step 21, the controller 206 acquires the level of the secondary battery 201A of the main device 20 (step 22).

Subsequently, the controller 206 determines whether the level of the secondary battery 201A of the main device 20 is lower than a capacity sufficient to use up an unused stick substrate 210 (step 31).

When a negative result is obtained in step 31, the controller 206 supplies electric power from the secondary battery 201A of the main device 20 to the heater 207 (step 37). In other words, generation of an aerosol using the secondary battery 201A of the main device 20 is started.

In contrast, when an affirmative result is obtained in step 31, the controller 206 acquires the level of the secondary battery 101C of the front panel 10 and then converts the level to an actually usable electric power value (step 32A).

Subsequently, the controller 206 starts supplying electric power from the secondary battery 101C of the front panel 10 to the secondary battery 201A of the main device 20 (step 34).

In this way, in the present embodiment, auxiliary charging of the secondary battery 201A of the main device 20 is started without determining whether the total value of the levels of the two secondary batteries has a capacity sufficient to use up an unused stick substrate 210.

Subsequently, the controller 206 determines whether the level of the secondary battery 201A of the main device 20 is recovered to the capacity of step 31 (step 35).

When a negative result is obtained in step 35, the controller 206 determines whether the level of the secondary battery 101C of the front panel 10 is lower than a lower limit (step 41).

The lower limit used in step 41 is a minimum electric power that is ensured for the operation of electronic components of the front panel 10 side.

When the level of the secondary battery 101C of the front panel 10 is higher than or equal to the lower limit, a negative result is obtained in step 41. In this case, the controller 206 returns to step 35.

When an affirmative result is obtained in step 35, the controller 206 stops supplying electric power from the secondary battery 101C of the front panel 10 to the secondary battery 201A of the main device 20 (step 36).

After that, the controller 206 supplies electric power from the secondary battery 201A of the main device 20 to the heater 207 (step 37). In other words, generation of an aerosol using the secondary battery 201A of the main device 20 is started.

When an affirmative result is obtained in step 41 as well, the controller 206 proceeds to step 36 to stop auxiliary charging and subsequently executes step 37.

When heating operation is started in this case, the level of the battery is short of the amount of electric power with which an unused stick substrate 210 can be used up.

However, it is possible to respond to the need of a user who wants to inhale an aerosol within a possible range even before full charge of the secondary battery 201A of the main device 20.

### <Summary>

As described above, in the present embodiment, before it is determined whether the total value of the level of the secondary battery 101C of the front panel 10 and the level of the secondary battery 201A of the main device 20 exceeds a capacity sufficient to use up an unused stick substrate 210, charging of the secondary battery 201A of the main device 20 using the level of the secondary battery 101C of the front panel 10 is started.

As a result, when the level of the secondary battery 201A of the main device 20 is recovered to the capacity needed to use up an unused stick substrate 210, the unused stick substrate 210 can be used without waste.

Even when the level of the secondary battery 201A is not recovered to a capacity sufficient to use up an unused stick substrate 210, it is possible to generate an aerosol by maximally using the levels of the two secondary batteries.

### <Eighth Embodiment>

In the present embodiment, a case where an aerosol is generated by directly supplying electric power from the secondary battery 101C of the front panel 10 to the heater 207 will be described.

The internal configuration and appearance configuration of the aerosol generating device 1 are common to those of the third embodiment.

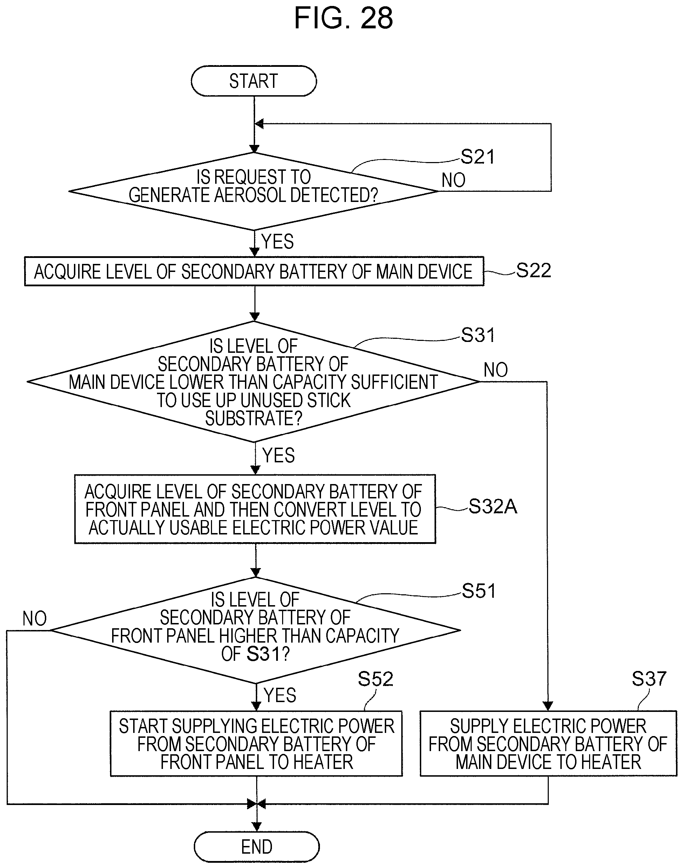

Fig. 28 is a flowchart that illustrates an example of auxiliary charging in the eighth embodiment. Fig. 28 assigns corresponding reference signs to corresponding parts of Fig. 25.

In the present embodiment as well, step 21, step 22, and step 31 are sequentially executed. When a negative result is obtained in step 31, the controller 206 supplies electric power from the secondary battery 201A of the main device 20 to the heater 207 (step 37).

In contrast, when an affirmative result is obtained in step 31, the controller 206 acquires the level of the secondary battery 101C of the front panel 10 and then converts the level to an actually usable electric power value (step 32A).

Subsequently, the controller 206 determines whether the level of the secondary battery 101C of the front panel 10 is higher than the capacity of step 31 (step 51). The determination here is performed in accordance with the converted level in step 32A.

When a negative result is obtained in step 51, the controller 206 ends the process without performing auxiliary charging or generation of an aerosol. The necessity of USB charging may be notified to a user.

On the other hand, when an affirmative result is obtained in step 51, the controller 206 starts supplying electric power from the secondary battery 101C of the front panel 10 to the heater 207 (step 52).

### <Summary>

In the case of the present embodiment, even when the level of the secondary battery 201A of the main device 20 is short of a capacity to use up an unused stick substrate 210, but when the level of the secondary battery 101C of the front panel 10 is higher than the capacity sufficient to use up the unused stick substrate 210, heating of the stick substrate 210 is started by using the level of the secondary battery 101C of the front panel 10.

In this case, it is possible to generate an aerosol without further reducing the level of the secondary battery 201A of the main device 20.

### <Other Embodiments>

(1) The embodiments of the present disclosure have been described; however, the technical scope of the present disclosure is not limited to the scope described in the above-described embodiments. It is obvious from the appended claims that the technical scope of the present disclosure also encompasses the above-described embodiments with various modifications or improvements.
(2) In the above-described embodiments, the case where a seam part between the front panel 10 and the main device 20 is continuously flush without any step and provides a unified appearance has been described. Alternatively, a step, a cutout, or the like may be provided at a seam part when there is a unity of appearance with the main device 20.
(3) In the above-described embodiments, the case where the aerosol source is solid has been described. Alternatively, the aerosol source may be liquid. When the aerosol source is liquid, a method in which an aerosol source is guided to a capillary called wick using capillarity and the aerosol source is vaporized by heating a coil wound around the wick is adopted.
(4) In the above-described embodiments, the aerosol generating device that generates an aerosol by heating a solid aerosol source has been described. Alternatively, an aerosol generating device may generate an aerosol by individually heating a solid aerosol source and a liquid aerosol source. The aerosol generating device of this type is also called a hybrid aerosol generating device.
(5) In the above-described first embodiment, determination as to whether the level of the secondary battery of the main device 20 is lower than the threshold V1 is performed when a request to generate an aerosol is detected. Alternatively, the determination may be performed regardless of a request to generate an aerosol.
(6) In the above-described third to eighth embodiments, the case where the battery of the front panel 10 is the secondary battery 101C has been described. Alternatively, the battery of the front panel 10 may be the primary battery 101A.
(7) In the above-described embodiments, the feeder circuit 102 is provided in the front panel 10. Alternatively, a configuration not including the feeder circuit 102 may be adopted. In this case, the power supply unit 201B of the main device 20 functions as the feeder circuit 102 and charges the secondary battery 101C of the front panel 10.
   Similarly, the charging circuit 105 may be omitted from the front panel 10. In this case, the power supply unit 201B of the main device 20 functions as the charging circuit 105.
(8) In the above-described embodiments, an example in which generation of an aerosol is permitted when the front panel 10 is attached to the main device 20 has been described. Alternatively, the main device 20 may be configured to be capable of generating an aerosol even in a state where the front panel 10 is not attached.
   In this case, attachment of the front panel 10 to the main device 20 is used to expand the function executable in the main device 20. For example, the main device 20 in a state where the front panel 10 is removed operates only on the built-in secondary battery 201A (see Fig. 7), and the main device 20 to which the front panel 10 with a secondary battery is attached has an enabled function of using electric power from the battery (the primary battery 101A, the secondary battery 101C) of the front panel 10.
(9) In the above-described embodiments, a state where generation of an aerosol is possible has been described as an example of the aerosol generating device 1 (main device 20) in an operable state; however, the aerosol generating device 1 (main device 20) in an operable state is not limited thereto. For example, even when it is not possible to generate an aerosol due to shortage of electric power but when another function is operating, it is the aerosol generating device 1 (main device 20) in an operable state. Examples of another function here include a function of checking and presenting the level of the secondary battery 201A or the like, a function of acquiring and presenting a history of inhalation, and a function of communicating with an external terminal.
(10) In the above-described embodiments, an example in which the front panel 10 in a state of being attached to the main device 20 is pushed to be deformed and the button 20B provided at the main device 20 is operated has been described. Alternatively, a method other than deforming the front panel 10 may be used to input instructions to the main device 20.

For example, the front panel 10 may include a touch panel and information indicating operation of a user to the touch panel may be notified to the controller 206 (see Fig. 6) of the main device 20 via the communicator 103 (see Fig. 6).

For example, a switch or a button may be disposed at the front panel 10, and presence or absence or the like of operation to them may be notified to the controller 206 (see Fig. 6) of the main device 20 via the communicator 103 (see Fig. 6). The touch panel, the switch, or the like here is an example of the operating portion.

A heat shield structure is adopted to a surface member or inside of the main device 20 of this type.

(11) In the above-described fourth, fifth, seventh, eighth embodiments and the like, detection of a request to generate an aerosol is requested as a precondition for execution of step 31 (see Fig. 21), and detection of predetermined timing is requested as a precondition for execution of step 31 (see Fig. 26) in the sixth embodiment; however, detection of another situation may be included. Examples of another situation include that the shutter 30 is caused to slide to an open position, and a case where the level of the battery is displayed (including a case of instructions of a user).

(12) In the above-described first, fourth, sixth embodiments, and the like, an example in which, on condition that a predetermined condition is further satisfied when a request to generate an aerosol is received, supply of electric power from the battery of the front panel 10 side to the secondary battery 201A of the main device 20 side has been described. However, it is conceivable that a case where a time that is taken until the capacity of the secondary battery 201A of the main device 20 side is recovered to a sufficient capacity to use up the stick substrate 210 is long.

The controller 206 may have a function to present to a user through the LED 20A (see Fig. 4) or the notifier provided at the front panel 10, the progress of charging or current capacity of the battery 201A of the main device 20 side and a function of providing notification to a smartphone or the like.

The controller 206 may have a function of presenting to a user that, when recovery of the capacity sufficient to use up the stick substrate 210 is detected, generation of an aerosol is possible, heating of the aerosol source is possible, or the like and a function of providing notification to a smartphone or the like. Predictability of a user can be increased by mounting these functions.

### <Summary>

The present disclosure includes the following configuration.
(1) An aerosol generating device including a controller, a first battery, and a heater that heats an aerosol source, wherein, when a second battery is provided in a cover member attached to a device main body, the controller controls supply of electric power from the second battery to the device main body.
(2) In the aerosol generating device according to (1), when a level of the first battery satisfies a predetermined condition, the controller provides instructions to supply electric power from the second battery to the device main body.
(3) In the aerosol generating device according to (2), when the predetermined condition is satisfied, the controller charges the first battery with electric power of the second battery.
(4) In the aerosol generating device according to (3), when a possibility that the level of the first battery becomes lower than a capacity needed to use up an unused aerosol source is predicted, the controller determines that the predetermined condition is satisfied.
(5) In the aerosol generating device according to (3), when the level of the first battery is lower than a capacity needed to use up an unused aerosol source, the controller determines that the predetermined condition is satisfied.
(6) In the aerosol generating device according to any one of (1) to (5), even when the level of the first battery is lower than a capacity needed to use up an unused aerosol source but a total value of the level of the first battery and a level of the second battery is higher than the capacity needed to use up the unused aerosol source, the controller provides instructions to supply electric power from the second battery to the device main body.
(7)In the aerosol generating device according to (6), when electric power of the second battery is allowed to be directly supplied to the heater, the controller directly supplies electric power of the second battery to the heater.
(8) In the aerosol generating device according to (6), the controller charges the first battery with electric power of the second battery.
(9) In the aerosol generating device according to (6), the controller changes the level of the second battery used to calculate the total value according to a difference of a power supply path from the second battery to the aerosol generating device.
(10) In the aerosol generating device according to any one of (1) to (9), the controller supplies electric power of the second battery to a component other than the heater in the device main body.
(11) In the aerosol generating device according to any one of (1) to (10), the controller charges the second battery with electric power supplied from the device main body side to the cover member side.
(12) A program for causing a computer provided in an aerosol generating device including a first battery and a heater that heats an aerosol source to, when a second battery is provided in a cover member attached to a device main body, execute a function of controlling supply of electric power from the second battery to the device main body.

### Reference Signs List

- 1: aerosol generating device
- 10: front panel
- 10A: main body panel
- 10B: window
- 10C,20C: magnet
- 20: main device
- 20A: LED
- 20B: button
- 21: USB connector
- 22: hole
- 30: shutter
- 101, 201: power supply
- 101A: primary battery
- 101B: buck-boost DC-DC circuit
- 101C, 201A: secondary battery
- 102: feeder circuit
- 103,205: communicator
- 104: level indicator
- 105: charging circuit
- 202: sensor
- 203: notifier
- 204: memory
- 206: controller
- 207: heater
- 208: heat insulator
- 209: holder
- 210: stick substrate

## Claims

1. An aerosol generating device comprising a controller, a first battery, and a heater that heats an aerosol source, wherein
when a second battery is provided in a cover member attached to a device main body, the controller controls supply of electric power from the second battery to the device main body.

2. The aerosol generating device according to claim 1, wherein
the controller
when a level of the first battery satisfies a predetermined condition, provides instructions to supply electric power from the second battery to the device main body.

3. The aerosol generating device according to claim 2, wherein
the controller
when the predetermined condition is satisfied, charges the first battery with electric power of the second battery.

4. The aerosol generating device according to claim 3, wherein
the controller
when a possibility that the level of the first battery becomes lower than a capacity needed to use up an unused aerosol source is predicted, determines that the predetermined condition is satisfied.

5. The aerosol generating device according to claim 3, wherein
the controller
when the level of the first battery is lower than a capacity needed to use up an unused aerosol source, determines that the predetermined condition is satisfied.

6. The aerosol generating device according to any one of claims 1 to 5, wherein
the controller
even when the level of the first battery is lower than a capacity needed to use up an unused aerosol source but a total value of the level of the first battery and a level of the second battery is higher than the capacity needed to use up the unused aerosol source, provides instructions to supply electric power from the second battery to the device main body.

7. The aerosol generating device according to claim 6, wherein
the controller
when electric power of the second battery is allowed to be directly supplied to the heater, directly supplies electric power of the second battery to the heater.

8. The aerosol generating device according to claim 6, wherein
the controller
charges the first battery with electric power of the second battery.

9. The aerosol generating device according to claim 6, wherein
the controller
changes the level of the second battery used to calculate the total value according to a difference of a power supply path from the second battery to the aerosol generating device.

10. The aerosol generating device according to any one of claims 1 to 9, wherein
the controller
supplies electric power of the second battery to a component other than the heater in the device main body.

11. The aerosol generating device according to any one of claims 1 to 10, wherein
the controller
charges the second battery with electric power supplied from the device main body side to the cover member side.

12. A program for causing a computer provided in an aerosol generating device including a first battery and a heater that heats an aerosol source to, when a second battery is provided in a cover member attached to a device main body, execute a function of controlling supply of electric power from the second battery to the device main body.
